# EUROPEAN PATENT APPLICATION

(11) **EP 3 859 846 A1**
(43) Date of publication of application: **04.08.2021**
(21) Application number: 18945337.6
(22) Date of filing: 26.12.2018
(51) Int. Cl.: H01M 8/04

(54) **STORAGE SYSTEM**

(71) Applicant: HONDA MOTOR CO., LTD., Minato-ku Tokyo 107-8556 (JP)
(72) Inventor: YAMADA Akira, Wako-shi, Saitama 351-0193 (JP); NAKAJIMA Nobutaka, Wako-shi, Saitama 351-0193 (JP); KITAMOTO Ryota, Wako-shi, Saitama 351-0193 (JP); MORI Takamasa, Tokyo 107-8556 (JP)
(74) Representative: Herzog, Markus
(86) International application number: PCT/JP2018/047924
(87) International publication number: WO 2020/136768

(57) **Abstract**

A preservation system comprises: a fuel cell; and an oxidant agent supply passage, positioned inside the power supply device, for supplying the oxidant agent to the fuel cell, and (i) a piping positioned outside the power supply device, and (ii) a connecting portion for oxidant agent for connecting the oxidant agent supply passage, to preserve the power supply device configured to be detachable to a work machine. The preservation system comprises: a preservation section for preserving the power supply device detached from the work machine; a purge gas conserving section for conserving a purge gas in order for purging the fuel cell and the oxidant agent supply passage; a purge gas piping, being a piping positioned outside the power supply device, with one end thereof connected to the connecting portion for oxidant agent of the power supply device and other end thereof connected to the purge gas conserving section;; and a purge gas flow rate regulation section for regulating flow rate of the purge gas supplied to the power supply device.

## Description

### BACKGROUND

### 1. TECHNICAL FIELD

The present invention relates to a preservation system.

### 2. RELATED ART

Lowering oxygen concentration inside an oxidant agent flow passage or a reducing agent flow passage of a fuel cell stack, as well as housing a fuel cell with a deoxidant inside the cover, for preventing deterioration during non-use period of a fuel cell stack, are known (for example, see Patent Documents 1 to 3).

### [Prior Arts]

### [Patent Documents]

[Patent Document 1] Patent Unexamined Publication No. 2006-032323
[Patent Document 2] Patent Unexamined Publication No. 2006-073297
[Patent Document 3] Patent Unexamined Publication No. 2018-037271

### [Problems to Be Solved]

However, with the conventional preservation method, it is difficult to maintain for a long period a state where the oxygen concentration inside a fuel cell stack is low.

### [General Disclosure]

In the first embodiment of the present invention, a preservation system is provided. The above-described preservation system preserves, for example, a power supply device. The above-described power supply device supplies the power to, for example, a work machine. The above-described power supply device is, for example, configured to be detachable to a work machine. The above-described power supply device includes, for example, a fuel cell. The above-described power supply device is, for example, positioned inside a power supply device and includes an oxidant agent supply passage for supplying the oxidant agent to a fuel cell. The above-described power supply device includes, for example, (i) a piping positioned outside the power supply device, and (ii) a connecting portion for oxidant agent for connecting the oxidant agent supply passage. The above-described preservation system comprises, for example, a preservation section for preserving a power supply device detached from a work machine. The above-described preservation system comprises, for example, a purge gas conserving section for conserving purge gas for purging the fuel cell and the oxidant agent supply passage. The above-described preservation system comprises, for example, a purge gas piping being a piping positioned outside the power supply device with one end thereof connected to the connecting portion for oxidant agent of the power supply device and the other end thereof connected to the purge gas conserving section. The above-described preservation system comprises, for example, a purge gas flow rate regulation section for regulating the purge gas flow rate to be supplied to the power supply device.

In the above-described preservation system, the preservation section may store the power supply device, which has been used at least once in a work machine, under a state where the power supply device is detached from the work machine. In the above-described preservation system, the power supply device may include a first oxidant agent supply section for supplying oxidant agent to a fuel cell via the oxidant agent supply passage utilizing power, the oxidant agent supply section being positioned inside the power supply device. The above-described preservation system may comprise a power source for supplying power to the first oxidant agent supply section.

In the above-described preservation system, the preservation section may include a first preservation section for preserving the first power supply device, provided with a first oxidant agent supply section. In the above-described preservation system, the preservation section may include a second preservation section for preserving a second power supply device not including a first oxidant agent supply section. The above-described preservation system may comprise a second oxidant agent supply section, positioned outside the power supply device, for supplying oxidant agent to the fuel cell of the second power supply device via the connecting portion for oxidant agent and the oxidant agent supply passage.

In the above-described preservation system, the preservation section may include a housing section for tightly sealing and housing the power supply device. The above-described preservation system may comprise an oxidant agent piping, being a piping positioned outside the power supply device, with one end thereof connected to the connecting portion for oxidant agent of the power supply device, for supplying oxidant agent to the oxidant agent supply passage. In the above-described preservation system, the connecting portion between the oxidant agent piping and the housing section may be sealed.

The above-described preservation system may comprise an oxidant agent piping, being a piping positioned outside the power supply device, with one end thereof connected to the connecting portion for oxidant agent of the power supply device, for supplying oxidant agent to the oxidant agent supply passage. In the above-described preservation system, the connecting portion for oxidant agent may connect the oxidant agent supply passage to the purge gas piping and the oxidant agent piping. In the above-described preservation system, the connecting portion for oxidant agent may include a first regulation section for regulating a communication state between the oxidant agent supply passage and the purge gas piping. In the above-described preservation system, the connecting portion for oxidant agent may include a second regulation section for regulating a communication state between the oxidant agent supply passage and the oxidant agent piping.

The above-described preservation system may comprise a management section for managing a state of the power supply device preserved in the preservation section. In the above-described preservation system, the management section may include an environment information acquisition section for acquiring information indicating a state of the surrounding environment of the preservation section. In the above-described preservation system, the management section may include a value assessment section for assessing the value of the power supply device preserved in the preservation section, based on the information acquired by the environment information acquisition section.

In the above-described preservation system, the management section may include a preservation form determination section for determining the preservation form of the power supply device, based on the value of the power supply device assessed by the value assessment section. In the above-described preservation system, the preservation form determination section may determine to generate power by running the power supply device preserved in the preservation section if assessment of a value of the power supply device by the value assessment section is smaller than the predefined reference.

In the above-described preservation system, the preservation section may preserve a plurality of power supply devices. In the above-described preservation system, the value assessment section may assess a value of each of the plurality of power supply devices. In the above-described preservation system, the preservation form determination section may determine, for certain power supply device for which assessment by the value assessment section satisfies the predefined condition among the plurality of power supply devices, to generate power by running said certain power supply device.

The summary clause does not necessarily describe all necessary features of the embodiments of the present invention. The present invention may also be a sub-combination of the features described above.

### BRIEF DESCRIPTION OF THE DRAWINGS

Fig. 1 schematically shows an example of system configuration of a fuel cell management system 100.
Fig. 2 schematically shows an example of system configuration of a vehicle 20.
Fig. 3 schematically shows an example of interior configuration of a fuel cell system 242.
Fig. 4 schematically shows an example of interior configuration of a utility connector 326 for power generation.
Fig. 5 schematically shows an example of interior configuration of a preservation device 120.
Fig. 6 schematically shows an example of interior configuration of a supporting portion 510.
Fig. 7 schematically shows an example of system configuration of a management server 140.
Fig. 8 schematically shows an example of system configuration of a computer 3000.

### DESCRIPTION OF EXEMPLARY EMBODIMENTS

Hereafter, the present invention will be explained through embodiments of the invention, however, the following embodiments do not limit the inventions according to the claims. Moreover, not all the combinations of the characteristics explained in the embodiments are necessarily essential for means for solving the problems of the inventions. Note that same or similar portions may be designated by the same reference numerals to omit overlapping explanation in some case.

### [Summary of the fuel cell management system]

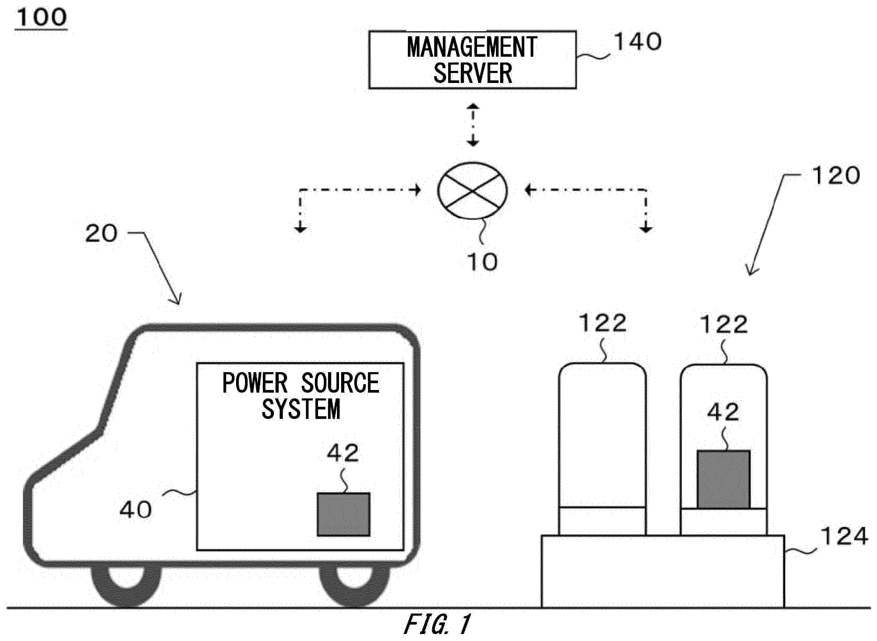

Fig. 1 schematically shows an example of system configuration of a fuel cell management system 100. In this embodiment, the fuel cell management system comprises a preservation device 120 and a management sever 140. In this embodiment, the preservation device 120 comprises one or more preservation container 122 and a preservation environment regulation section 124.

In this embodiment, detail of the fuel cell management system 100 is explained, taking a case where a power source system 40 mounted to a vehicle 20 has a detachable fuel cell unit 42 and the fuel cell management system 100 preserves the fuel cell unit 42 detached from the power source system 40 as an example. In this embodiment, the fuel cell management system 100 regulates a preservation state of the fuel cell unit 42 in order that deterioration progress of the fuel cell unit 42 during the preservation period will be inhibited.

In this embodiment, each of the vehicle 20, the preservation device 120 and the management server 140 can send and receive information among each other via the communication network 10. In this embodiment, the communication network 10 may be a transmission path for a wired communication, may be a transmission path for a wireless communication, and may be a combination of a transmission path for wireless communication and a transmission path for wired communication.

The communication network 10 may include a radio packet communication network, the Internet, a P2P network, a dedicated line, a VPN, or a power line communication line. The communication network 10 may include a mobile communication network such as a mobile phone line network. The communication network 10 may include a wireless data communication network, such as wireless MAN (for example, WiMAX (registered trademark)), wireless LAN (for example, WiFi (registered trademark)), Bluetooth (registered trademark), Zigbee (registered trademark) and NFC (Near Field Communication). The communication network 10 may include a V2X communication line, such as inter-vehicle communication and road-vehicle communication.

In this embodiment, the vehicle 20 performs a work to transport at least either of a human and an item (this is called "transporting work" in some cases). The vehicle 20 may perform a transporting work by a driver's operation, and also may perform a transporting work by automatic driving. For reference, work to be performed by the vehicle 20 is not limited to a transporting work. The vehicle 20 may perform any work, utilizing power, instead of a transporting work, or along with a transporting work.

As the vehicle 20, an automobile, a motorcycle, an electric train and the like are exemplified. As the motorcycle, (i) a motorbike, (ii) a three-wheeled motorbike, (iii) a standing ride type two-wheeled or three-wheeled vehicle equipped with a power unit, like a Segway (registered trademark), a kick board (registered trademark) with power unit, a skate board with power unit, are exemplified. Detail of the vehicle 20 will be described later.

In this embodiment, the power source system 40 supplies the power to each part of the vehicle 20. The power source system 40 may supply power for the vehicle 20 to move. In this embodiment, the power source system 40 supplies the power generated by the fuel cell unit 42 to the vehicle 20. A single power source system 40 may have a single fuel cell unit 42, or a single power source system 40 may have a plurality of fuel cell units 42. Detail of the power source system 40 will be described later.

In this embodiment, the fuel cell unit 42 is configured to be detachable to the power source system 40 mounted to the vehicle 20. In one embodiment, a fuel cell unit 42 detached from a given power source system 40 will be preserved in the preservation device 120, and thereafter will be attached to said given power system 40. In another embodiment, a fuel cell unit 42 detached from a given power source system 40 will be preserved in the preservation device 120, and thereafter will be attached to another power system 40. In another embodiment, after a fuel cell unit 42 is detached from a given power source system 40, another fuel cell unit 42 preserved in the preservation device 120 will be attached to said given power source system 40. Detail of the fuel cell unit 42 will be described later.

In this embodiment, the preservation device 120 preserves one or more fuel cell unit 42 detached from each of the one or more power source system 40. The preservation system 120 may preserve the fuel cell unit 42, which has been used at least once in the power source system 40, under a state where the fuel cell unit 42 is detached from the power source system 40.

In this embodiment, the one or more preservation container 122 preserves the fuel cell unit 42 detached from the power source system 40. A single preservation container 122 may house a single fuel cell unit 42, or a single preservation container 122 may house a plurality of fuel cell units 42. The preservation container 122 may tightly seal and house the fuel cell unit 42.

As a material of the preservation container 122, a non-breathable material may be used. By this, the preservation container 122 may tightly seal and house the fuel cell unit 42. As the non-breathable material, for example, material with aeration rate, in an atmosphere 20 degrees Celsius, of 1000 mL/(m². day. atm) or lower, preferably of 500 mL/(m². day. atm) or lower, and more preferably of 200 mL/(m² ·day. atm) or lower, is used. As the non-breathable material, (i) polyvinylidene chloride, (ii) material of OPP film with polyvinylidene chloride coated thereon (this is also called KOP in some cases), (iii) material of polyester film with polyvinylidene chloride coated thereon (this is also called KPET in some cases), (iv) material of nylon with polyvinylidene chloride coated thereon (this is also called KON in some cases), etc., are exemplified.

By this, the interior environment (this is called "atmosphere" in some cases) of the preservation container 122 can be maintained under a state different from the exterior environment of the preservation container 122. For example, the oxygen concentration inside the preservation container 122 will be maintained under a state where it is lower than the oxygen concentration outside the preservation container 122. Because the environment inside the preservation container 122 is regulated, the preservation state of the fuel cell unit 42 can be managed. Detail of the preservation container 122 will be described later.

In this embodiment, the preservation environment regulation section 124 regulates the preservation environment of the fuel cell unit 42. For example, the preservation environment regulation section 124 regulates the environment inside each of the one or more preservation container 122. More concretely, the preservation environment regulation section 124 regulates at least one among the temperature, humidity, oxygen concentration, hydrogen concentration and particulate concentration, of the inside of each of the one or more preservation container 122. By this, deterioration progress of the fuel cell unit 42 can be inhibited. Detail of the preservation environment regulation section 124 will be described later.

In this embodiment, the management server 140 manages one or more fuel cell unit 42. In one embodiment, the management server 140 manages the state of each of the one or more fuel cell unit 42. As the state of the fuel cell unit 42, a running state of the fuel cell unit 42, a preservation state of the fuel cell unit 42, etc., are exemplified. In another embodiment, the management server 140 manages the action of the preservation device 120. By this, the management server 140 can manage the preservation state of each of the one or more fuel cell unit 42. Detail of the management server 140 will be described later.

The vehicle 20 may be an example of a work machine. Transporting work may be an example of a work. The power source system 40 may be an example of a work machine. The fuel cell unit 42 may be an example of a power supply device. The fuel cell management system 100 may be an example of a preservation system. The preservation device 120 may be an example of a preservation system. The preservation container 122 may be an example of a preservation section and a housing section. The management server 140 may be an example of a management section.

### [Concrete configuration of each portion of the fuel cell management system 100]

Each portion of the fuel cell management system 100 may be realized by a hardware, may be realized by a software, or may be realized by a hardware and a software. As for each portion of the fuel cell management system 100, at least a part thereof may be realized by a single server, or may be realized by a plurality of servers. As for each portion of the fuel cell management system 100, at least a part thereof may be realized on a virtual machine or on a cloud system. As for each portion of the fuel cell management system 100, information may be stored utilizing a distributed register technology or a distributed network such as a block chain.

As for each portion of the fuel cell management system 100, at least a part thereof may be realized by a personal computer or a mobile terminal. For example, a personal computer or a mobile terminal is utilized as the user interface of each portion of the fuel cell management system 100. As the mobile terminal, a mobile phone, a smartphone, a PDA, a tablet, a notebook computer or a laptop computer, a wearable computer, etc., are exemplified.

If at least a part of the components configuring the fuel cell management system 100 is realized by a software, the component realized by said software may be realized by activating a program which defines the action related to said component, in an information processing device having a common configuration. The above-described information processing device comprises, for example, (i) a data processing device including a processor such as a CPU or a GPU, or a ROM, a RAM, or a communication interface, etc., (ii) an input device such as a keyboard, a touch panel, a camera, a microphone, various kinds of sensors, a GPS receiver, (iii) an output device such as a display device, a speaker, a vibration device, and (iv) a storage device (including an external storage device.) such as a memory or an HDD.

In the above-described information processing device, the above-described data processing device or storage device may store a program. The above-described program may be stored in a non-transitory computer readable storage medium. The above-described program is performed by a processor to thereby make the above-described information processing device perform actions defined by said program.

The program may be stored in a non-transitory computer readable storage medium. The program may be stored in a computer readable medium such as a CD-ROM, a DVD-ROM, a memory, a hard disk, or may be stored in a storage device connected to a network. The program may be installed to a computer which configures at least a part of the fuel cell management system 100 from a storage device connected to a computer readable medium or a network. The program may be performed to thereby make the computer function as at least a part of each portion of the fuel cell management system 100.

The program which makes the computer function as at least a part of each portion of the fuel cell management system 100 may comprise a module which defines the action of each portion of the fuel cell management system 100. This program or module coerces on the data processing device, input device, output device, storage device, etc., to accordingly make the computer function as each portion of the fuel cell management system 100, or make the computer perform an information processing method at each portion of the fuel cell management system 100.

Information processing described in the program will, as said program is read by the computer, thereby function as a concrete means in which the software related to said program and various kinds of hardware resources of the fuel cell management system 100 cooperate. And thus, the above-described concrete means realizes computation or processing of an information associated with the purpose of use of the computer in this embodiment, thereby the fuel cell management system 100 associated with said purpose of use will be established

### [Summary of the vehicle 20]

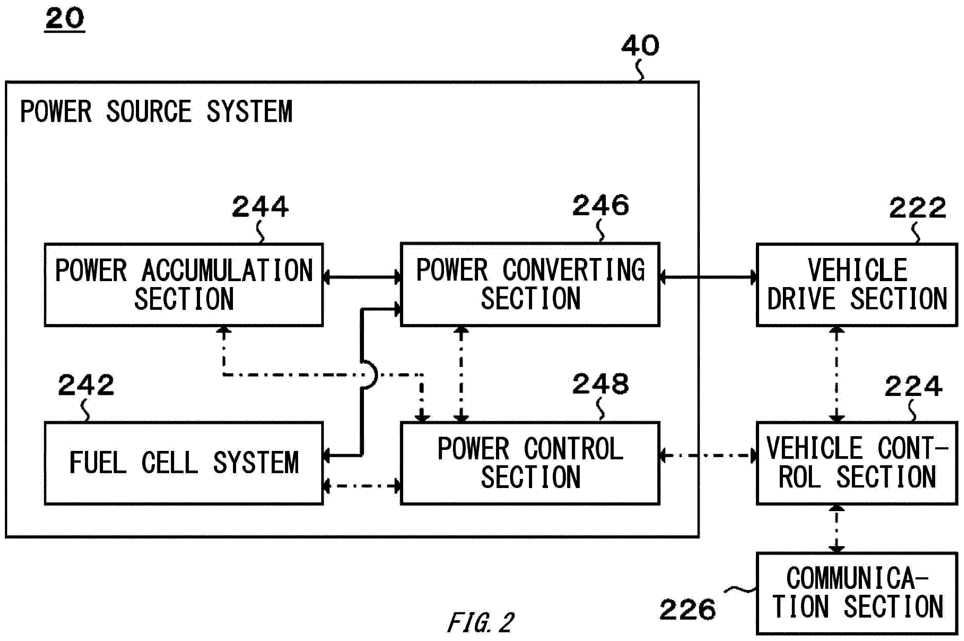

Fig. 2 schematically shows an example of system configuration of a vehicle 20. In this embodiment, the vehicle 20 comprises a power source system 40, a vehicle drive section 222, a vehicle control section 224 and a communication section 226. In this embodiment, the power source system 40 includes a fuel cell system 242, a power accumulation section 244, a power converting section 246 and a power control section 248. Each portion of the vehicle 20 is configured to, for example, send and receive information to/from each other.

In this embodiment, the vehicle drive section 222 utilizes the power supplied by the power supply system 40 to drive each portion of the vehicle 20. The vehicle drive section 222 may be a motor for driving the vehicle 20. The vehicle drive section 222 may be an air conditioning equipment for regulating the air environment in the room space of the vehicle 20.

In this embodiment, the vehicle control section 224 controls the vehicle 20. The vehicle control section 224 may control the vehicle drive section 222. For example, the vehicle control section 224 acquires the information indicating the state of the vehicle drive section 222 from various kinds of sensors positioned in the vehicle drive section 222. The vehicle control section 224 may control the action of the vehicle drive section 222. The vehicle control section 224 may control the power supply to the vehicle drive section 222.

In this embodiment, the vehicle control section 224 may control the power source system 40. For example, it acquires the information indicating the state of the power source system 40 from various kinds of sensors positioned in the power source system 40. The vehicle control section 224 may control the action of the power source system 40. For example, if the power source system 40 includes multiple operation modes, the vehicle control section 224 controls the operation mode of the power source system 40. The operation mode can associate, for example, (i) a magnitude of the output power, (ii) a following property or responsiveness against the output instruction, (iii) a fuel efficiency or power generation efficiency, and (iv) one or more property selected among a group consisted of inhibition of deterioration, with the operation condition for prioritizing than other properties which are not selected.

In this embodiment, the communication section 226 sends and receives information between itself and an exterior information processing device. For example, the communication section 226 sends and receives information between itself and at least either one of the preservation device 120 and the management server 140. The communication section 226 may send information received from the vehicle control section 224 to at least either one of the preservation device 120 and the management server 140. The communication section 226 may output the information received from at least either one of the preservation device 120 and the management server 140 to the vehicle control section 224. The communication section 226 may correspond to one or more communication method.

In this embodiment, the fuel cell system 242 comprises the fuel cell unit 42. The fuel cell system 242 may supply the power generated by the fuel cell unit 42 to the vehicle 20. For example, the fuel cell system 242 supplies the power generated by the fuel cell unit 42 to the vehicle drive section 222. Detail of the fuel cell system 242 will be described later.

In this embodiment, the power accumulation section 244 accumulates the power. The power accumulation section 244 may supply accumulated power to the vehicle 20. For example, the power accumulation section 244 supplies the accumulated power to the vehicle drive section 222.

In this embodiment, the power converting section 246 converts the power. The power converting section 246 may convert a direct current into an alternate current, may convert an alternate current into a direct current, or may convert an inputted direct voltage into another direct voltage. The power converting section 246 may include a bidirectional DC-DC converter.

The power converting section 246 may switch the power distribution state. The power converting section 246 may switch the supply destination of the inputted power. The power converting section 246 may supply the power generated by the fuel cell system 242 to the vehicle drive section 222. The power converting section 246 may supply the power generated by the fuel cell system 242 to the power accumulation section 244. The power converting section 246 may supply the power accumulated in the power accumulation section 244 to the fuel cell system 242. The power converting section 246 may supply the power accumulated in the power accumulation section 244 to the vehicle drive section 222. The power converting section 246 may supply a regenerative power from the vehicle drive section 222 to the power accumulation section 244.

In this embodiment, the power control section 248 controls the power converting section 246. The power control section 248 may control the power converting section 246 to convert the power. The power control section 248 may control the power converting section 246 to accordingly control the timing of starting or stopping of power supply. The power control section 248 may control the power converting section 246 to accordingly control the supply destination of the inputted power.

The vehicle drive section 222 may be an example of a work machine. The fuel cell system 242 may be an example of a power supply device.

In this embodiment, detail of a work machine for performing a work has been explained, taking a case where the vehicle 20 performs a transporting work as an example. However, the work machine is not limited to the vehicle 20. As other examples of work machines, a conveyance apparatus, a transportation apparatus, a cleaning apparatus, an air conditioning apparatus, a lighting apparatus, a robot, etc. are exemplified. As the conveyance apparatus, a moving body, a heavy machinery, an agricultural machine, a snow removing machine, an elevator, an escalator, etc. are exemplified.

As the moving body, a vehicle, a marine vessel, a flying object, etc. are exemplified. As the marine vessel, a ship, a hovercraft, a water bike, a submarine, a submersible craft, an underwater scooter, etc. can be exemplified. As the flying object, an air plane, an air ship or a balloon, a hot-air balloon, a helicopter, a drone, etc. can be exemplified. As the transportation apparatus, a pump, a blower, a sprayer, a cleaning machine, etc. are exemplified. As the cleaning apparatus, vacuum cleaner, washing machine, etc. are exemplified.

### [Concrete configuration of each portion of the vehicle 20]

Each portion of the vehicle 20 may be realized by a hardware, may be realized by a software, or may be realized by a hardware and a software. As for each portion of the vehicle 20, at least a part thereof may be realized by a single server, or may be realized by a plurality of servers. As for each portion of the vehicle 20, at least a part thereof may be realized on a virtual machine or on a cloud system. For example, an artificial intelligence realized on the above-described server, virtual machine or cloud system may perform a part of the information processing in each portion of the vehicle 20. Each portion of the vehicle 20 may store information utilizing a distributed register technology or a distributed network, such as a block chain.

As for each portion of the vehicle 20, at least a part thereof may be realized by a personal computer or a mobile terminal. For example, a personal computer or a mobile terminal is utilized as the user interface of each portion of the vehicle 20. As the mobile terminal, a mobile phone, a smartphone, a PDA, a tablet, a notebook computer or a laptop computer, a wearable computer, etc. are exemplified.

If at least a part of the components configuring the vehicle 20 is realized by a software, the component realized by said software may be realized by activating a program which defines the action related to said component, in an information processing device having a common configuration. The above-described information processing device comprises, for example, (i) a data processing device including a processor such as a CPU or a GPU, or a ROM, a RAM, or a communication interface, etc., (ii) an input device such as a keyboard, a touch panel, a camera, a microphone, various kinds of sensors, a GPS receiver, (iii) an output device such as a display device, a speaker, a vibration device, and (iv) a storage device (including an external storage device.) such as a memory or an HDD.

In the above-described information processing device, the above-described data processing device or storage device may store a program. The above-described program may be stored in a non-transitory computer-readable storage medium. The above-described program is performed by a processor to thereby make the above-described information processing device perform actions defined by said program.

The program may be stored in a non-transitory computer-readable storage medium. The program may be stored in a computer readable medium such as a CD-ROM, a DVD-ROM, a memory, a hard disk, or may be stored in a storage device connected to a network. The program may be installed to a computer which configures at least a part of the vehicle 20 from a storage device connected to a computer readable medium or a network. The program may be performed to thereby make the computer function as at least a part of each portion of the vehicle 20.

The program which makes the computer function as at least a part of each portion of the vehicle 20 may comprise a module which defines the action of each portion of the vehicle 20. This program or module coerces on the data processing device, input device, output device, storage device, etc., to accordingly make the computer function as each portion of the vehicle 20, or make the computer perform an information processing method at each portion of the vehicle 20.

Information processing described in the program will, as said program is read by the computer, thereby function as a concrete means in which the software related to said program and various kinds of hardware resources of the vehicle 20 cooperate. And thus, the above-described concrete means realizes computation or processing of an information associated with the purpose of use of the computer in this embodiment, thereby the vehicle 20 associated with said purpose of use will be established

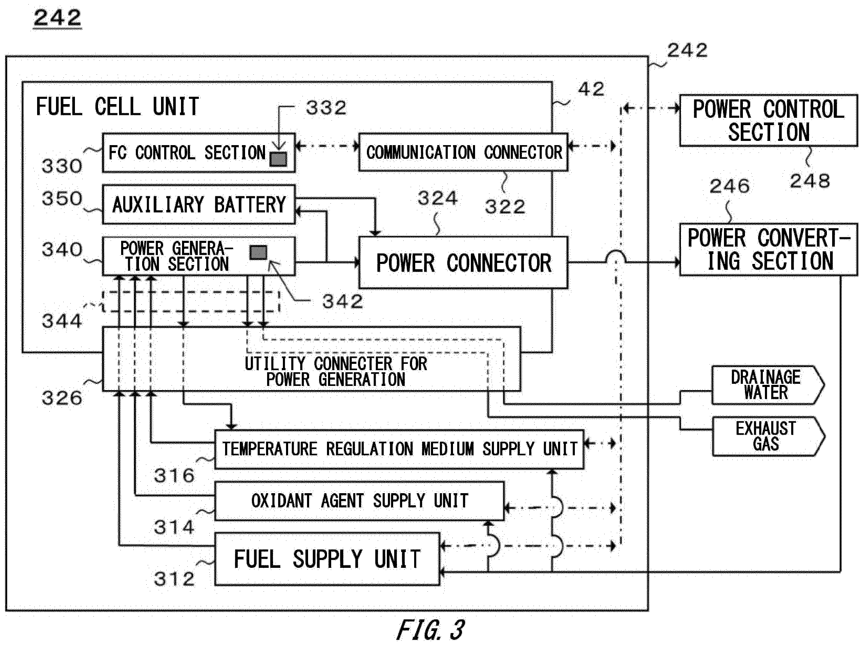

Fig. 3 schematically shows an example of interior configuration of a fuel cell system 242. In this embodiment, the fuel cell system 242 includes a fuel cell unit 42, a fuel supply unit 312, an oxidant agent supply unit 314, and a temperature regulation medium supply unit 316. In this embodiment, the fuel cell unit 42 includes a communication connector 322, a power connector 324 and a utility connector 326 for power generation. In this embodiment, the fuel cell unit 42 includes an FC control section 330, a power generation section 340, one or more sensor 342, one or more piping 344 and an auxiliary battery 350. In this embodiment, the FC control section 330 may have a memory 332.

In this embodiment, the fuel cell unit 42 utilizes the fuel supplied from the fuel supply unit 312 and the fuel supplied from the oxidant agent supply unit 314, to generate power. The temperature of the fuel cell unit 42 is regulated by the temperature regulation medium supplied from the temperature regulation medium supply unit 316. The power generated by the fuel cell unit 42 is, for example, supplied to each portion of the vehicle 20, via the power converting section 246. In this embodiment, the fuel cell unit 42 may control the action of at least one of the fuel supply unit 312, the oxidant agent supply unit 314 and the temperature regulation medium supply unit 316. The fuel cell unit 42 may act pursuant to the instruction from the power control section 248.

In this embodiment, the fuel cell unit 42 may be a unit, in which at least the FC control section 330, the power generation section 340, the piping 344 and various kinds of wirings are packaged. The fuel cell unit 42 may be a unit, in which at least the FC control section 330, the power generation section 340, the auxiliary battery 350, and the piping and the wirings are packaged. The components of the fuel cell unit 42 may be housed in a single enclosure, or may be housed in a plurality of enclosures separately.

In this embodiment, the fuel cell unit 42 is attached to the fuel cell system 242, for example, by being connected to the utility piping and the power cable positioned in the fuel cell system 242. The fuel cell unit 42 may be attached to the fuel cell system 242, by being connected to the utility piping, the power cable and the communication cable positioned in the fuel cell system 242. By this, the fuel cell unit 42 is mounted to the vehicle 20.

In one embodiment, the fuel cell unit 42 is attached to the fuel cell system 242 so as not to be easily detached by a general user of the vehicle 20. The fuel cell unit 42 is fixed, for example, to a predetermined position of the fuel cell system 242.

In another embodiment, the fuel cell unit 42 is detachably attached to the fuel cell system 242. By this, even a general user of the vehicle 20 can detach the fuel cell unit 42 from the fuel cell system 242. A general user of the vehicle 20 can, for example, attach the fuel cell unit 42 detached from the vehicle 20 to another work machine, to accordingly operate said other work machine with the power generated by the fuel cell unit 42.

Note that, even in a case where the fuel cell unit 42 is attached to the fuel cell system 242 so as not to be easily detached by a general user of the vehicle 20, a manufacturer or a vendor of the vehicle 20 or the power source system 40 may be able to detach the fuel cell unit 42 from the fuel cell system 242 without largely impairing the integrity as a unit, in some cases. For example, a manufacturer or a vendor of the vehicle 20 or the power source system 40 may be able to detach the fuel cell unit 42 from the fuel cell system 242 without dismantling the fuel cell unit 42, in some cases. An embodiment like this may be an example of the embodiment in which the fuel cell unit 42 is detachably attached to the fuel cell system 242.

If the fuel cell unit 42 is detached from the fuel cell system 242 and left in the atmosphere in such a state, deterioration progress of the fuel cell unit 42 is possibly accelerated. Especially, if the fuel cell unit 42 has been used for power generation and is thereafter detached from the fuel cell system 242, air as an oxidant agent remains in the inside of the fuel cell unit 42. The remaining air inside the fuel cell unit 42 can deteriorate the fuel cell stack of the fuel cell unit 42.

Therefore, according to this embodiment, the fuel cell unit 42 detached from the fuel cell system 242 is preserved in the preservation device 120. The preservation device 120 preserves the fuel cell unit 42 in a form to inhibit deterioration progress of the fuel cell unit 42. For example, the preservation device 120 replaces the remaining air in the fuel cell unit 42 with the purge gas. The preservation device 120 may run the fuel cell unit 42 at a proper timing. For example, the preservation device 120 runs the fuel cell unit 42 in an idling power generation mode or in a deterioration inhibition mode at a proper timing. By this, for example, humidity inside the fuel cell stack is properly kept. As a result, deterioration progress of the fuel cell unit 42 can be inhibited.

In this embodiment, the fuel supply unit 312 supplies a fuel for power generation to the fuel cell unit 42. The fuel for power generation may be a hydrogen, or may be a compound containing a hydrogen. The fuel supply unit 312 may comprise a sensor (not shown) for measuring the flow rate of the fuel and a flow rate regulation section (not shown) for regulating the flow rate of the fuel. The fuel supply unit 312 may act pursuant to the instruction from the fuel cell unit 42.

The fuel supply unit 312 may supply fuel to the power generation section 340, utilizing the power via the piping 344. The fuel supply unit 312 may be positioned inside the power source system 40. In one embodiment, where the fuel cell system 242 is attached to the power source system 40, the fuel supply unit 312 supplies a fuel to the power generation section 340, utilizing the power supplied from at least one of the power accumulation section 244, the power generation section 340 and the auxiliary battery 350. In another embodiment, where the fuel cell system 242 is preserved in the preservation device 120, the fuel supply unit 312 supplies a fuel to the power generation section 340, utilizing the power supplied from the preservation device 120. In another embodiment, where the fuel cell system 242 is preserved in the preservation system 120, the fuel supply unit 312 may supply a fuel to the power generation section 340, utilizing the power supplied from the preservation device 120 and the power supplied from at least either one of the power generation section 340 and the auxiliary battery 350.

In this embodiment, the oxidant agent supply unit 314 supplies an oxidant agent for power generation to the fuel cell unit 42. The oxidant agent may be an oxygen, or may be an air. The oxidant agent supply unit 314 may comprise a sensor (not shown) for measuring the flow rate of the oxidant agent and a flow rate regulation section (not shown) for regulating the flow rate of the oxidant agent. The oxidant agent supply unit 314 may act pursuant to the instruction from the fuel cell unit 42.

The oxidant agent supply unit 314 may supply an oxidant agent to the power generation section 340, utilizing the power via the piping 344. The oxidant agent supply unit 314 may be positioned inside the power source system 40. In one embodiment, where the fuel cell system 242 is attached to the power source system 40, the oxidant agent supply unit 314 supplies the oxidant agent to the power generation section 340, utilizing the power supplied from at least one of the power accumulation section 244, the power generation section 340 and the auxiliary battery 350. In another embodiment, where the fuel cell system 242 is preserved in the preservation device 120, the oxidant agent supply unit 314 may supply an oxidant agent to the power generation section 340, utilizing the power supplied from the preservation device 120. In another embodiment, where the fuel cell system 242 is preserved in the preservation system 120, the oxidant agent supply unit 314 may supply an oxidant agent to the power generation section 340, utilizing the power supplied from preservation device 120 and the power supplied from at least either one of the power generation section 340 and the auxiliary battery 350.

The oxidant agent supply unit 314 may include a pump or a blower (not shown) for sucking air, serving as an oxidant agent, from outside the fuel cell system 242. The oxidant agent supply unit 314 may be connected to an air supply piping (not shown) positioned in the vehicle 20.

In this embodiment, the temperature regulation medium supply unit 316 supplies a temperature regulation medium for regulating the temperature of the power generation stack of the fuel cell unit 42 to the fuel cell unit 42. As the temperature regulation medium, water, an ethylene glycol, a long life coolant (called "LLC" in some cases.) are exemplified. The temperature regulation medium supply unit 316 may comprise a sensor (not shown) for measuring the flow rate of the temperature regulation medium and a flow rate regulation section (not shown) for regulating the flow rate of the temperature regulation medium. The temperature regulation medium supply unit 316 may act pursuant to the instruction from the fuel cell unit 42. The temperature regulation medium supply unit 316 may comprise a heat exchanger (not shown) for regulating the temperature of the temperature regulation medium. As the heat exchanger, a radiator is exemplified.

The temperature regulation medium supply unit 316 may supply a temperature regulation medium to the power generation section 340, utilizing the power via the piping 344. The temperature regulation medium supply unit 316 may be positioned inside the power source system 40. In one embodiment, where the fuel cell system 242 is attached to the power source system 40, the temperature regulation medium supply unit 316 supplies a temperature regulation medium to the power generation section 340, utilizing the power supplied from at least one of the power accumulation section 244, the power generation section 340 and the auxiliary battery 350. In another embodiment, where the fuel cell system 242 is preserved in the preservation system 120, the temperature regulation medium supply unit 316 may supply a temperature regulation medium to the power generation section 340, utilizing the power supplied from the preservation device 120. In another embodiment, where the fuel cell system 242 is preserved in the preservation system 120, the temperature regulation medium supply unit 316 may supply a temperature regulation medium to the power generation section 340, utilizing power supplied from preservation device 120 and the power supplied from at least either one of the power generation section 340 and the auxiliary battery 350.

### [Summary of each portion of the fuel cell unit 42]

In this embodiment, the communication connector 322 connects a communication cable or a communication apparatus positioned in the fuel cell unit 42 to a communication cable or a communication apparatus positioned in the fuel cell system 242. A communication cable or a communication apparatus positioned in the fuel cell unit 42, and a communication cable or a communication apparatus positioned in the fuel cell system 242, may be connected wiredly or wirelessly.

The communication connector 322 may include a wireless communication apparatus. The fuel cell unit 42 may send and receive information to/from the communication apparatus positioned in the fuel cell system 242, the power control section 248 and the vehicle control section 224, via wireless communication apparatus. The fuel cell unit 42 may send and receive information between itself and the preservation device 120, via a wireless communication apparatus.

In this embodiment, the power connector 324 electrically connects a power cable positioned in the fuel cell unit 42 to a power cable positioned in the fuel cell system 242. The power cable positioned in the fuel cell unit 42 and a power cable positioned in the fuel cell system 242 may be connected wiredly or wirelessly.

The communication connector 324 may include a wireless power supply apparatus. The fuel cell unit 42 may be electrically connected to the power converting section 246 or the vehicle drive section 222, via a wireless power supply apparatus. By this, transmitting and receiving of the power becomes possible between the fuel cell system 242 and the fuel cell unit 42. As a result, transmitting and receiving of the power becomes possible between the power converting section 246 and the fuel cell unit 42, and transmitting and receiving of the power becomes possible between the vehicle drive section 222 or the power accumulation section 244 and the fuel cell unit 42. The fuel cell unit 42 may be connected to the preservation device 120, via a wireless power supply apparatus.

In this embodiment, the utility connector 326 for power generation connects the utility piping positioned in the fuel cell unit 42 and the utility piping positioned in the fuel cell system 242. By this, transmitting and receiving of the utility to be utilized for the operation of the fuel cell unit 42 becomes possible between the fuel cell system 242 and the fuel cell unit 42. As a result, transmitting and receiving of the utility becomes possible between the vehicle 20 or the fuel cell system 242 and the fuel cell unit 42.

For example, transmitting and receiving of the fuel becomes possible between the fuel supply unit 312 and the fuel cell unit 42. Transmitting and receiving of the oxidant agent becomes possible between the oxidant agent supply unit 314 and the fuel cell unit 42. Transmitting and receiving of a temperature regulation medium or a heat becomes possible between the temperature regulation medium supply unit 316 and the fuel cell unit 42. Also, transmitting and receiving of a drainage water and an exhaust gas generated in association with the power generation at the fuel cell unit 42 becomes possible between the fuel cell unit 42 and the vehicle 20 or the fuel cell system 242.

In this embodiment, the FC control section 330 controls the fuel cell unit 42. For example, the FC control section 330 controls the power generation of the fuel cell unit 42. The FC control section 330 may control at least one of the output voltage, the output current, the output power and the output rate of the fuel cell unit 42. The FC control section 330 may control at least one of the output voltage, the output current and the output rate of the power generation section 340. The FC control section 330 may control at least one of the output voltage, the output current, the output power and the output rate of the auxiliary battery 350. The FC control section 330 may control the action of at least one of the fuel supply unit 312, the oxidant agent supply unit 314 and the temperature regulation medium supply unit 316 to thereby control power generation of the fuel cell unit 42. The FC control section 330 may act pursuant to the instruction from the power control section 248.

In one embodiment, the FC control section 330 sends the information indicating the running state of each portion of the fuel cell unit 42 to the management server 140, for example, via the power control section 248. As a running state, an output power, an output voltage, an output current or an output rate is exemplified. The FC control section 330 may correlate the information indicating the running state of each portion of the fuel cell unit 42 with the information indicating the time, to send it to the management server 140.

The FC control section 330 may send the information indicating the running state of each portion of the fuel cell unit 42 to the management server 140, during the period when the fuel cell unit 42 is mounted to the vehicle 20 or the power source system 40. The FC control section 330 may send the information indicating the running state of each portion of the fuel cell unit 42 to the management server 140, during the period when the fuel cell unit 42 is preserved in the preservation device 120.

In another embodiment, the FC control section 330 stores the information indicating the running state of each portion of the fuel cell unit 42 in the memory 332. As a running state, an output power, an output voltage, an output current or an output rate is exemplified. The FC control section 330 may correlate the information indicating the running state of each portion of the fuel cell unit 42 with the information indicating the time, to send it to the memory 332.

The FC control section 330 may store the information indicating the running state of each portion of the fuel cell unit 42 in the memory 332, during the period when the fuel cell unit 42 is mounted to the vehicle 20 or the power source system 40. The FC control section 330 may store the information indicating the running state of each portion of the fuel cell unit 42 in the memory 332, during the period when the fuel cell unit 42 is preserved in the preservation device 120. By this, even if, for example, the fuel cell unit 42 runs during a period when it is unable to communicate with the management server 140, the management server 140 can acquire the information indicating the running state of each portion of the fuel cell unit 42 in an ex-post manner.

For example, even if the fuel cell unit 42 is unable to communicate with the management server 140 during the period when the fuel cell unit 42 is preserved in the preservation device 120, the fuel cell unit 42 is taken out from the preservation device 120 to consequently mounted to the vehicle 20, and thereafter the vehicle control section 224 reads the information stored in the memory 332 of the fuel cell unit 42 and sends said information to the management server 140. By this, the management server 140 can acquire the information indicating the running state of each portion of the fuel cell unit 42 in an ex-post manner.

In this embodiment, the FC control section 330 acquires the information indicating the detection result by each sensor from each of the one or more sensor 342. In one embodiment, the FC control section 330 sends the information indicating the detection result by each sensor to the management server 140, for example, via the power control section 248. The FC control section 330 may correlate the information indicating the detection result by each sensor with the information indicating the time, to send it to the management server 140. The FC control section 330 may send the information indicating the detection result by each sensor to the management server 140, during the period when the fuel cell unit 42 is mounted to the vehicle 20 or the power source system 40. The FC control section 330 may send the information indicating the detection result by each sensor to the management server 140, during the period when the fuel cell unit 42 is preserved in the preservation device 120.

In another embodiment, the FC control section 330 stores the information indicating the detection result of each sensor to the memory 332. The FC control section 330 may correlate the information indicating the detection result by each sensor with the information indicating the time, to store it in the memory 332. The FC control section 330 may store the information indicating the detection result by each sensor to the memory 332, during the period when the fuel cell unit 42 is mounted to the vehicle 20 or the power source system 40. The FC control section 330 may store the information indicating the detection result by each sensor in the memory 332, during the period when the fuel cell unit 42 is preserved in the preservation device 120.

By this, even if, for example, the state of the surrounding environment of the fuel cell unit 42 fluctuates during the period when the fuel cell unit 42 is unable to communicate with the management server 140, the management server 140 can acquire the information indicating the fluctuation of the state of said surrounding environment state in an ex-post manner. As the state of the surrounding environment, a temperature, a humidity, an oxygen concentration, a hydrogen concentration, etc. are exemplified.

For example, even if the fuel cell unit 42 is unable to communicate with the management server 140 during the period when the fuel cell unit 42 is preserved in the preservation device 120, the fuel cell unit 42 is taken out from the preservation device 120 to consequently mounted to the vehicle 20, and thereafter the vehicle control section 224 reads the information stored in the memory 332 of the fuel cell unit 42 and sends said information to the management server 140. By this, the management server 140 can acquire the information indicating the fluctuation state of the surrounding environment of the fuel cell unit 42 in an ex-post manner.

In this embodiment, the memory 332 stores various kinds of information related to the fuel cell unit 42. For example, the memory 332 stores the identification information of the fuel cell unit 42. The memory 332 may store the information acquired from the FC control section 330. The memory 332 may store the information acquired from the preservation device 120.

For example, the memory 332 acquires, from the FC control section 330, identification information of at least one of the vehicle 20, the power source system 40 and the fuel cell system 242, to which the fuel cell unit 42 is mounted, and stores said information. The memory 332 may correlate identification information of at least one of the vehicle 20, the power source system 40 and the fuel cell system 242, to which the fuel cell unit 42 is mounted, with the information indicating the time when the fuel cell unit 42 is mounted to at least one of the vehicle 20, the power source system 40 and the fuel cell system 242, to thereafter store it.

For example, the memory 332 acquires the identification information of the preservation device 120, in which the fuel cell unit 42 is preserved, from the FC control section 330 or the preservation device 120, to thereafter store said information. The memory 332 may correlate the identification information of the preservation device 120, in which the fuel cell unit 42 is preserved, with the information indicating the time when the fuel cell unit 42 is preserved in the preservation device 120 to thereafter store said information.

The memory 332 may acquire the information indicating the running history of the fuel cell unit 42 from at least one of the FC control section 330 and the preservation device 120, to thereafter store said information. The memory 332 may store the information indicating the running history of at least one of the power generation section 340 and the auxiliary battery 350. The running history may be an aggregation of the records in which the information indicating the time and the information indicating the running state at said time are correlated. As the running state, an output power, an output voltage, an output current, an output rate, etc. are exemplified.

The memory 332 may acquire the information indicating the fluctuation history of the state of the surrounding environment of the fuel cell unit 42 from at least one of the FC control section 330 and the preservation device 120, to thereafter store said information. The memory 332 may store the information indicating the fluctuation history of the state of the surrounding environment of at least one of the power generation section 340 and the auxiliary battery 350. The fluctuation history may be an aggregation of records in which the information indicating the time and the information indicating the state of the surrounding environment at said time are correlated. As the state of the surrounding environment, a temperature, a humidity, an oxygen concentration, a hydrogen concentration, a particulate concentration, etc. are exemplified.

In this embodiment, the power generation section 340 generates the power. The power generation section 340 may comprise a fuel cell. The fuel cell makes the fuel supplied from the fuel supply unit 312 and the oxidant agent supplied from the oxidant agent supply unit 314 react, to generate a power. The power generation section 340 may be electrically connected to the power connector 324. The power generation section 340 may be electrically connected to the auxiliary battery 350. The power generation section 340 may supply a part of the generated power to the auxiliary battery 350.

As stated above, in order to activate the power generation section 340, a power is necessary to activate the fuel supply unit 312 for supplying the oxidant agent and the fuel to the power generation section 340 as well as the oxidant agent supply unit 314. Especially, the oxidant agent supply unit 314 often comprise a fan for pressure-feeding an air as the oxidant agent to the power generation section 340. However, the amount of power consumption of the above-described fan is comparatively large. Accordingly, in preparation for activation of the power generation section 340, it is preferred that a power for operating the oxidant agent supply unit 314 is secured.

In this embodiment, at least a part of one or more sensor 342 detects the running state of at least one of the power generation section 340 and the auxiliary battery 350. At least a part of one or more sensor 342 detects the state of surrounding environment of at least one of the power generation section 340 and the auxiliary battery 350. Each of the one or more sensor 342 may output the information indicating the detection result to the FC control section 330.

In this embodiment, one or more piping 344 distributes various kinds of fluids between the utility connector 326 for power generation and the power generation section 340. Detail of the one or more piping 344 will be described later.

In this embodiment, the auxiliary battery 350 accumulates the power for activating at least one of the fuel supply unit 312, the oxidant agent supply unit 314 and the temperature regulation medium supply unit 316. The auxiliary battery 350 may accumulate the power for activating the oxidant agent supply unit 314. The auxiliary battery 350 may be electrically connected to the power connector 324. The auxiliary battery 350 may accumulate the power supplied from the power converting section 246. The auxiliary battery 350 may be electrically connected to the power generation section 340. The auxiliary battery 350 may accumulate the power supplied from the power generation section 340.

For reference, at least one of the fuel supply unit 312, the oxidant agent supply unit 314 and the temperature regulation medium supply unit 316 may be configured to operate utilizing the power supplied from the power accumulation section 244 at the time of activation of the fuel cell unit 42. At least one of fuel supply unit 312, the oxidant agent supply unit 314 and the temperature regulation medium supply unit 316 may be configured to operate utilizing the power supplied from the power accumulation section 244 at the time of activation of the fuel cell unit 42 and the power generated by the fuel cell unit 42.

At least one of the fuel supply unit 312, the oxidant agent supply unit 314 and the temperature regulation medium supply unit 316 may be configured to operate utilizing the power supplied from the power accumulation section 244, if the remaining capacity of the auxiliary battery 350 is out of the range of the predefined numeric range at the time of activation of the fuel cell unit 42.

The "numeric range" is not limited to cases where both of an upper limit and a lower limit are defined. The "numeric range" may define only the upper limit, or may define only the lower limit.

The oxidant agent supply unit 314 may operate utilizing the power generated by the power generation section 340, after the amount of power generation of the power generation section 340 reaches to satisfy the predefined condition. For example, if the amount of power generation of the power generation section 340 is smaller than the predefined threshold, the oxidant agent supply unit 314 supplies the oxidant agent to the power generation section 340, utilizing the power supplied from the auxiliary battery 350 or the power accumulation section 244. If the amount of power generation of the power generation section 340 is larger than the above-described threshold, the oxidant agent supply unit 314 supplies the oxidant agent to the power generation section 340, utilizing the power generated by the power generation section 340.

The supply amount of the oxidant agent where the oxidant agent supply unit 314 utilizes the power supplied from the auxiliary battery 350 or the power accumulation section 244 may be smaller than the supply amount of the oxidant agent where the oxidant agent supply unit 314 utilizes the power generated by the power generation section 340. If the oxidant agent supply unit 314 utilizes the power generated by the power generation section 340, the supply amount of the oxidant agent may fluctuate associated with the magnitude of the power generated by the power generation section 340. The supply amount of oxidant agent may continuously fluctuate associated with the magnitude of the power generated by the power generation section 340, or may gradually fluctuate.

Note that, in this embodiment, detail of the fuel cell unit 42 has been explained, taking the case where the fuel cell unit 42 does not include the fuel supply unit 312, the oxidant agent supply unit 314 and the temperature regulation medium supply unit 316 as an example. However, the fuel cell unit 42 is not limited to this embodiment. In this embodiment, the fuel cell unit 42 may include at least one of the fuel supply unit 312, the oxidant agent supply unit 314 and the temperature regulation medium supply unit 316.

In this embodiment, detail of the power source system 40 has been explained, taking the case where the fuel cell unit 42 is a packaged unit as an example. However, the power source system 40 is not limited to this embodiment. In another embodiment, the fuel cell system 242 may be a packaged unit. Further in another embodiment, the power system 40 may be a packaged unit.

In this case, according to one embodiment, the unit configuration of the fuel cell unit 42 housed in one preservation container 122 among the plurality of preservation containers 122 provided at the preservation device 120 and the unit configuration of the fuel cell unit 42 housed in other preservation containers 122 are different. Moreover, according to another embodiment, multiple fuel cell units 42 with different unit configurations are housed in a single preservation device 120.

For example, one fuel cell unit 42 includes at least one of the fuel supply unit 312, the oxidant agent supply unit 314 and the temperature regulation medium supply unit 316, and the other fuel cell unit 42 does not include the fuel supply unit 312, the oxidant agent supply unit 314 and the temperature regulation medium supply unit 316. For example, one fuel cell unit 42 includes the oxidant agent supply unit 314, and the other fuel cell unit 42 does not include the oxidant agent supply unit 314.

In this embodiment, detail of the power source system 40 has been explained, taking a case where the fuel cell unit 42 is configured to be detachable to the fuel cell system 242 as an example. However, the power source system 40 is not limited to this embodiment. In another embodiment, the fuel cell system 242 may be configured to be detachable to the power source system 40. Further in another embodiment, the power source system 40 may be configured to be detachable to the vehicle 20.

The oxidant agent supply unit 314 may be an example of the first oxidant agent supply section. The power generation section 340 may be an example of the fuel cell. The piping 344 may be an example of the oxidant agent supply passage. The utility connector 326 for power generation may be an example of the connecting portion for oxidant agent. The plurality of preservation containers 122 may be an example of the first preservation section and the second preservation section.

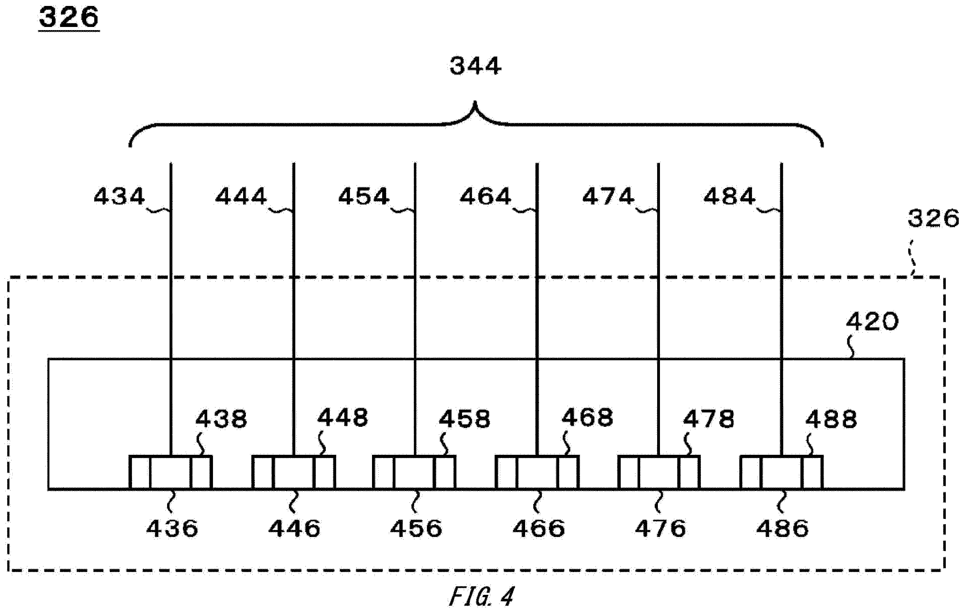

Fig. 4 schematically shows an example of interior configuration of a utility connector 326 for power generation. In this embodiment, the utility connector 326 for power generation comprises a main body 420, a plug 436, a plug 446, a plug 456, a plug 466, a plug 476 and a plug 486.

In this embodiment, the main body 420 is only required to have proper rigidity, and its detail is not particularly limited. Note that in this embodiment, detail of the main body 420 is explained taking a case where the plug 436, the plug 446, the plug 456, the plug 466, the plug 476 and the plug 486 are positioned in a single main body 420 as an example. However, the main body 420 is not limited to this embodiment. In another embodiment, the utility connector 326 for power generation may have a plurality of main bodies 420, and the plug 436, the plug 446, the plug 456, the plug 466, the plug 476 and the plug 486 may be positioned in the plurality of main bodies 420 in a distributed manner.

In this embodiment, the plug 436 is positioned inside the concave portion 438 formed on one plane of the main body 420. By this, breakage of the plug 436 is inhibited.

In this embodiment, the plug 436 connects the piping 434 positioned inside the fuel cell unit 42 and the piping for fuel positioned outside the fuel cell unit 42. In this embodiment, the piping 434 is positioned inside the fuel cell unit 42, and supplies the fuel to the power generation section 340. By this, for example, the oxidant agent supply unit 314 can supply the fuel to the power generation section 340 under a state where the fuel cell unit 42 is attached to the power source system 40.

In this embodiment, the plug 446 is positioned inside the concave portion 448 formed on one plane of the main body 420. By this, breakage of the plug 446 is inhibited.

In this embodiment, the plug 446 connects the piping 444 positioned inside the fuel cell unit 42 and the piping for the oxidant agent positioned outside the fuel cell unit 42. In this embodiment, the piping 444 is positioned inside the fuel cell unit 42, and supplies the oxidant agent to the power generation section 340. By this, for example, the fuel supply unit 312 can supply the oxidant agent to the power generation section 340 under a state where the fuel cell unit 42 is attached to the power source system 40.

In this embodiment, the plug 456 is positioned inside the concave portion 458 formed on one plane of the main body 420. By this, breakage of the plug 456 is inhibited.

In this embodiment, the plug 456 connects the piping 454 positioned inside the fuel cell unit 42 and the piping for supplying temperature regulation medium positioned outside the fuel cell unit 42. In this embodiment, the piping 454 is positioned inside the fuel cell unit 42, and supplies the temperature regulation medium to the power generation section 340. By this, for example, the temperature regulation medium supply unit 316 can supply the temperature regulation medium to the power generation section 340 under a state where the fuel cell unit 42 is attached to the power source system 40.

In this embodiment, the plug 466 is positioned inside the concave portion 468 formed on one plane of the main body 420. By this, breakage of the plug 466 is inhibited.

In this embodiment, the plug 466 connects the piping 464 positioned inside the fuel cell unit 42 and the piping for collecting the temperature regulation medium positioned outside the fuel cell unit 42. In this embodiment, the piping 464 is positioned inside the fuel cell unit 42, and discharges the temperature regulation medium which has been heat-exchanged. By this, for example, the temperature regulation medium supply unit 316 can collect the temperature regulation medium from the power generation section 340 under a state where the fuel cell unit 42 is attached to the power source system 40.

In this embodiment, the plug 476 is positioned inside the concave portion 478 formed on one plane of the main body 420. By this, breakage of the plug 476 is inhibited.

In this embodiment, the plug 476 connects the piping 474 positioned inside the fuel cell unit 42 and the piping for discharging the exhaust gas positioned outside the fuel cell unit 42. In this embodiment, the piping 464 is positioned inside the fuel cell unit 42, and discharges the exhaust gas from the power generation section 340. By this, for example, the power generation section 340 can discharge the exhaust gas to the outside of the fuel cell unit 42 under a state where the fuel cell unit 42 is attached to the power source system 40.

In this embodiment, the plug 486 is positioned inside the concave portion 488 formed on one plane of the main body 420. By this, breakage of the plug 486 is inhibited.

In this embodiment, the plug 486 connects the piping 484 positioned inside the fuel cell unit 42 and the piping for discharging the drainage water positioned outside the fuel cell unit 42. In this embodiment, the piping 464 is positioned inside the fuel cell unit 42, and discharges the drainage water from the power generation section 340. By this, for example, the power generation section 340 can discharge the drainage water to the outside of the fuel cell unit 42 under a state where the fuel cell unit 42 is attached to the power source system 40.

The piping 444 may be an example of the oxidant agent supply passage. The plug 446 may be an example of the connecting portion for oxidant agent.

Note that, in this embodiment, detail of the utility connector 326 for power generation has been explained, taking a case where the utility connector 326 for power generation comprises the plug 436, the plug 446, the plug 456, the plug 466, the plug 476 and the plug 486 as an example. However, the utility connector 326 for power generation is not limited to this embodiment. In another embodiment, at least one of the plug 436, the plug 446, the plug 456, the plug 466, the plug 476 and the plug 486 may be a socket, or may be a piping connector of a different kind.

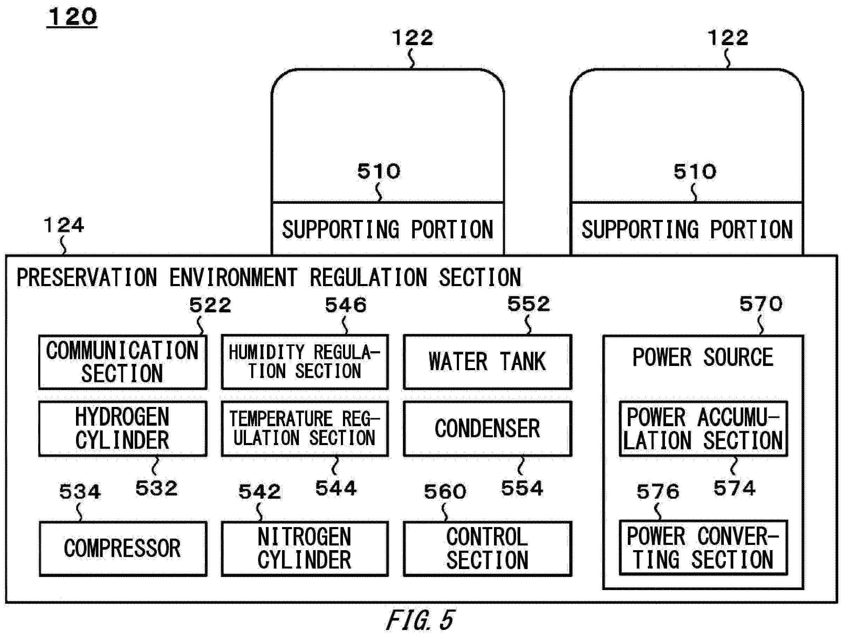

Fig. 5 schematically shows an example of interior configuration of a preservation device 120. In this embodiment, the preservation device 120 comprises one or more preservation container 122 and a preservation environment regulation section 124. In this embodiment, the preservation environment regulation section 124 includes one or more supporting portion 510, a communication section 522, a hydrogen cylinder 532, a compressor 534, a nitrogen cylinder 542, a temperature regulation section 544, a humidity regulation section 546, a water tank 552, a condenser 554, a control section 560 and a power source 570. In this embodiment, the power source 570 may include a power accumulation section 574 and a power converting section 576.

In this embodiment, each of the one or more supporting portion 510 supports each of the one or more preservation container 122. Supporting form of the preservation container 122 by the supporting portion 510 is not particularly limited. The contacting portion of the preservation container 122 and the supporting portion 510 may be sealed by an appropriate sealing agent or sealing member. By this, the preservation container 122 and the supporting portion 510 may tightly seal and house the fuel cell unit 42 detached from the power source system 40.

Note that, in this embodiment, detail of the supporting portion 510 is explained, taking a case where a single supporting portion 510 supports a single preservation container 122 as an example. However, the supporting portion 510 is not limited to this embodiment. In another embodiment, a single supporting portion 510 may support a plurality of preservation container 122. Detail of the supporting portion 510 will be described later.

In this embodiment, the communication section 522 sends and receives information between itself and an external information processing device. For example, the communication section 522 sends and receives information between itself and at least either one of the vehicle 20 and the management server 140. The communication section 522 may send information received from the control section 560 to at least either one of the vehicle 20 and the management server 140. The communication section 522 may output the information received from at least either one of the vehicle 20 and the management server 140 to the control section 560. The communication section 522 may correspond to one or more communication method.

The communication section 522 may send and receive information between itself and the fuel cell unit 42 housed inside the preservation container 122. The communication section 522 may be wiredly connected or wirelessly connected with the communication connector 322 of the fuel cell unit 42.

In this embodiment, the hydrogen cylinder 532 conserves the hydrogen. The hydrogen cylinder 532 supplies a hydrogen as the fuel to the power generation section 340 of the fuel cell unit 42, which is detached from the power source system 40 and preserved in the preservation container 122, via the supporting portion 510.

In this embodiment, the compressor 534 generates a compressed air at any pressure. The compressor 534 supplies an air as the oxidant agent to the power generation section 340 of the fuel cell unit 42, which is detached from the power source system 40 and preserved in the preservation container 122, via the supporting portion 510.

In this embodiment, the nitrogen cylinder 542 conserves a nitrogen gas. The nitrogen gas is utilized as the purge gas to be replaced with the remaining air or hydrogen inside the power generation section 340. The nitrogen gas is utilized as the purge gas to be replaced with the remaining hydrogen inside the piping 434. The nitrogen gas is utilized as the purge gas to be replaced with the remaining air inside the piping 444. The nitrogen cylinder 542 supplies, for example, the nitrogen as the purge gas to the power generation section 340 of the fuel cell unit 42, which is detached from the power source system 40 and preserved in the preservation container 122, via the supporting portion 510.

The nitrogen gas may be utilized for regulating the interior environment of the preservation container 122. Concretely saying, the nitrogen gas is utilized as the purge gas to be replaced with the remaining air or hydrogen inside the preservation container 122. The nitrogen cylinder 542 supplies, for example, the nitrogen as the purge gas to the inside of at least one of the one or more preservation container 122, via the supporting portion 510. For the nitrogen discharged from the nitrogen cylinder 542, at least one of its temperature and its humidity may be regulated before it is supplied to the preservation container 122.

In this embodiment, the temperature regulation section 544 regulates the temperature of the nitrogen supplied to each of the one or more preservation container 122. The temperature regulation section 544 may regulate the temperature of the nitrogen supplied to each of the one or more preservation container 122, each independently.

In this embodiment, the temperature regulation section 544 may supply, for example, temperature regulation medium for regulating the temperature of the power generation section 340 to the power generation section 340 of the fuel cell unit 42, which is detached from the power source system 40 and preserved in the preservation container 122, via the supporting portion 510. Moreover, the temperature regulation section 544 may regulate the temperature of the above-described temperature regulation medium, utilizing a heat exchanger (not shown) or the like.

In this embodiment, the humidity regulation section 546 regulates the humidity of the nitrogen supplied to each of the one or more preservation container 122. The humidity regulation section 546 may regulate the humidity of the nitrogen supplied to each of the one or more preservation container 122, each independently.

The humidity regulation section 546 may regulate the humidity of the nitrogen, utilizing the water retained in the water tank 552. In one embodiment, the humidity regulation section 546 receives a predetermined volume of water from the water tank 552. The humidity regulation section 546 heats the above-described water to generate water vapor. The humidity regulation section 546 mixes the generated water vapor and the nitrogen supplied from the nitrogen cylinder 542 to the preservation container 122. By this, the humidity of the nitrogen supplied to the preservation container 122 can be regulated. In another embodiment, the humidity regulation section 546 makes at least a part of the nitrogen supplied from the nitrogen cylinder 542 to the preservation container 122 pass through the water retained in the water tank 552. By this, the humidity of the nitrogen supplied to the preservation container 122 can be regulated.

In this embodiment, the water tank 552 retains the water discharged from the power generation section 340. In one embodiment, the water tank 552 retains the drainage water discharged from the power generation section 340. In another embodiment, the water tank 552 retains a part of the water contained in the exhaust gas discharged from the power generation section 340. Concretely saying, during when the exhaust gas discharged from the power generation section 340 passes through the condenser 554, a part of the water vapor contained in the exhaust gas as well as of the splash water is condensed to accordingly generates liquid water. The water tank 552 retains water acquired in the condenser 554.

In this embodiment, the control section 560 controls the action of each portion of the preservation environment regulation section 124. By this, the interior environment of the fuel cell unit 42 preserved by the preservation device 120 is regulated. Moreover, the interior environment of each of the one or more preservation container 122 is regulated.

Concretely saying, the control section 560 may control the timing for supplying the hydrogen to each of the one or more fuel cell unit 42 preserved by the preservation container 122 from the hydrogen cylinder 532. The control section 560 may control the above-described hydrogen supply amount.

The control section 560 may control the timing for supplying air to each of the one or more fuel cell unit 42 preserved by the preservation container 122 from the compressor 534. The control section 560 may control the above-described air supply amount.

The control section 560 may control the timing for supplying the nitrogen to each of the one or more fuel cell unit 42 preserved by the preservation container 122 from the nitrogen cylinder 542. The control section 560 may control the above-described nitrogen supply amount. The control section 560 may supply the nitrogen intermittently, or may supply the nitrogen continuously.

For example, the control section 560 periodically supplies the nitrogen to the fuel cell unit 42 to purge the hydrogen remaining inside at least one of the oxidant agent supply passage and the fuel supply passage of the fuel cell unit 42. The control section 560 may periodically supply the nitrogen to the fuel cell unit 42 at a flow rate larger than usual purging so as to flush the dusts accumulated inside the fuel cell unit 42. The control section 560 may control at least one of the temperature or the humidity of the nitrogen.

The control section 560 may control the timing for supplying the nitrogen to the inside of each of the one or more preservation container 122 from the nitrogen cylinder 542. The control section 560 may control the above-described nitrogen supply amount. The control section 560 may supply the nitrogen intermittently, or may supply the nitrogen continuously. The control section 560 may control at least one of the temperature or the humidity of the nitrogen.

The control section 560 may control the timing for circulating the temperature regulation medium by the temperature regulation section 544. The control section 560 may control the above-described temperature regulation medium circulation amount. The control section 560 may control the above-described temperature regulation medium supply temperature.

In this embodiment, the control section 560 may control the action of each of the one or more fuel cell unit 42 preserved by the preservation device 120. In one embodiment, the control section 560 determines to run at least one of the one or more more fuel cell unit 42 preserved by the preservation device 120, at a given timing. The control section 560 may determine the power generation amount of each of at least one fuel cell unit 42. The control section 560 may determine the power generation mode of each of at least one fuel cell unit 42.

For example, the control section 560 determines to run the fuel cell unit 42 in an idling power generation mode. The control section 560 may determine to run the fuel cell unit 42 in a deterioration inhibition mode. In the deterioration inhibition mode, the fuel cell unit 42, for example, compares with the idling power generation mode, and accordingly generates the power under an operating condition under which deterioration of the fuel cell stack is inhibited.

The control section 560 may determine to periodically run each of the one or more fuel cell unit 42. The control section 560 may determine, based on the state of at least one of the interior environment and the surrounding environment of said given fuel cell unit 42, at least one of the followings: whether or not to run given fuel cell unit 42, the power generation amount of said given fuel cell unit 42, and the power generation mode of said given fuel cell unit 42.

In this embodiment, the power source 570 supplies the power to each portion of the preservation environment regulation section 124. The power source 570 may supply power to at least one of the one or more fuel cell unit 42 preserved by the preservation device 120. For example, the power source 570 supplies the power to the fuel cell unit 42 at the time of the activation of the fuel cell unit 42.

In this embodiment, the power accumulation section 574 accumulates the power. In one embodiment, the power accumulation section 574 accumulates the power received from an external power source (for example, a power system). In another embodiment, the power accumulation section 574 accumulates the power generated by at least one of the one or more fuel cell unit 42 preserved by the preservation device 120.

In this embodiment, the power converting section 576 converts the power. The power converting section 576 may have a configuration similar to that of the power converting section 246.

According to this embodiment, the preservation container 122 and the supporting portion 510 tightly seal and house the fuel cell unit 42 detached from the power source system 40. Moreover, the interior environment of the preservation container 122 can be maintained under a state different from the exterior environment of the preservation container 122. By this, the deterioration progress of the fuel cell unit 42 preserved inside the preservation container 122 can be inhibited. Further, according to this embodiment, under a state where the fuel cell unit 42 is housed inside the preservation container 122, a purge gas is injected into the inside of the fuel cell unit 42, or the fuel cell unit 42 generates a very small amount of power. By this, deterioration progress of the fuel cell unit 42 can be further inhibited.

The hydrogen cylinder 532 may be an example of the fuel conserving section. The compressor 534 may be an example of the second oxidant agent supply section. The nitrogen cylinder 542 may be an example of the purge gas conserving section. The power source 570 may be an example of the power source. The hydrogen may be an example of the fuel. The air may be an example of the oxidant agent. The nitrogen may be an example of the purge gas.

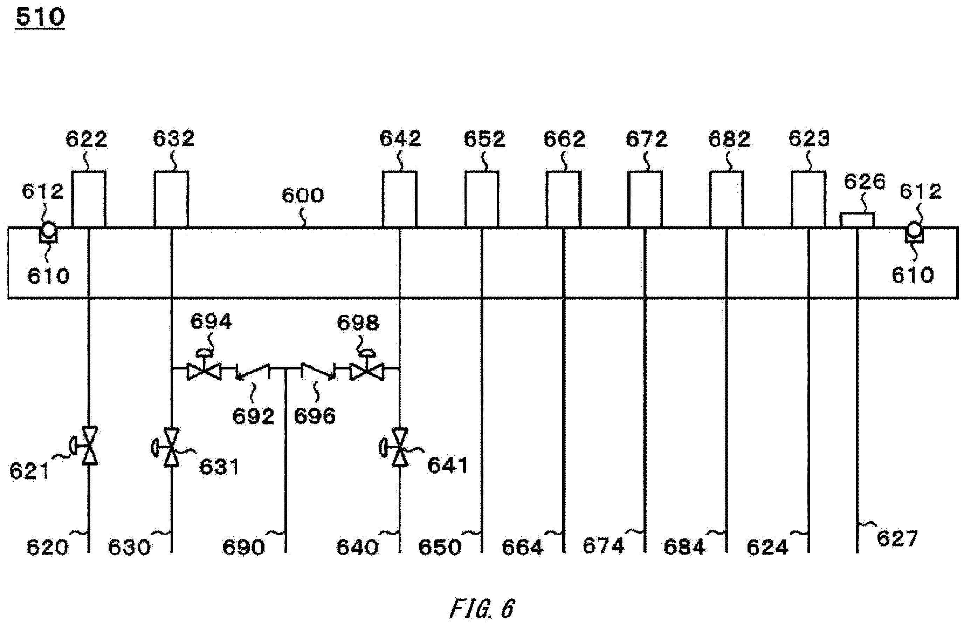

Fig. 6 schematically shows an example of interior configuration of a supporting portion 510. In this embodiment, the supporting portion 510 comprises a main body 600, one or more gas supply nozzle 622, one or more gas exhaust nozzle 623 and one or more sensor 626. In this embodiment, the supporting portion 510 comprises a socket 632, a socket 642, a socket 652, a socket 662, a socket 672 and a socket 682, on a side of one plane of the main body 600.

In this embodiment, the main body 600 is only required to have proper rigidity, and its detail is not particularly limited. Each connecting portion between the main body 600 and each of the gas supply nozzle 622, the gas exhaust nozzle 623, the socket 632, the socket 642, the socket 652, the socket 662, the socket 672 and the socket 682 may be sealed by an appropriate sealing agent or sealing member. By this, the preservation container 122 and the supporting portion 510 can tightly seal and house the fuel cell unit 42 under a state where various kinds of piping and wirings of the fuel cell unit 42 and their corresponding piping and wirings of the preservation device 120 are connected.

Note that, in this embodiment, detail of the main body 600 is explained, taking a case where the gas supply nozzle 622, the gas exhaust nozzle 623, the socket 632, the socket 642, the socket 652, the socket 662, the socket 672 and the socket 682 are positioned in a single main body 600, as an example. However, the main body 600 is not limited to this embodiment. In another embodiment, the supporting portion 510 may have a plurality of main bodies 600 so that the gas supply nozzle 622, the gas exhaust nozzle 623, the socket 632, the socket 642, the socket 652, the socket 662, the socket 672 and the socket 682 are positioned in a plurality of main bodies 600 in a distributed manner.

According to this embodiment, at an outer peripheral portion of the main body 600, a concave portion 610 is formed in a part of the region contacting with the bottom of the preservation container 122. A sealing member 612 is positioned at the concave portion 610. The sealing member 612 may be, for example, an O-ring. By this, the preservation container 122 and the supporting portion 510 may tightly seal and house the fuel cell unit 42 detached from the power source system 40. Note that, an appropriate sealing member may be positioned at a region where each socket and the main body 600 contact. Moreover, an appropriate sealing member may be positioned around each piping positioned inside the main body 600.

In this embodiment, each of one of the gas supply nozzle 622 supplies the nitrogen into the inside of the preservation container 122. For the above-described nitrogen, at least one of its temperature, humidity, oxygen concentration, hydrogen concentration and the particulate concentration may be regulated to a predetermined range. Each of the one or more gas supply nozzle 622 may be connected to the nitrogen cylinder 542 via the piping 620. A flow rate regulation valve 621 may be positioned between each of the one or more gas supply nozzle 622 and the nitrogen cylinder 542. The flow rate regulation valve 621 may act based on the instruction from the control section 560. In this embodiment, one or more gas exhaust nozzle 623 discharges the gas inside the preservation container 122 to the outside of the preservation container 122 via the piping 624.

In this embodiment, one or more sensor 626 detects the state of the interior environment of the preservation container 122. As the interior environment state, a temperature, a humidity, an oxygen concentration, a hydrogen concentration, particulate concentration, etc. are exemplified. The information indicating the detection result of the one or more sensor 626 is outputted to the control section 560 via the signal cable 627.

In this embodiment, the socket 632 is connected to the plug 436 when the fuel cell unit 42 is preserved in the preservation container 122. The socket 632 may be connected to the hydrogen cylinder 532 via the piping 630. By this, the hydrogen is supplied to the power generation section 340 from the hydrogen cylinder 532 via the piping 630 and the socket 632. One end of the piping 630 is connected to the socket 632, and the other end is connected to the hydrogen cylinder 532. A flow rate regulation valve 631 may be positioned between the socket 632 and the hydrogen cylinder 532. The flow rate regulation valve 631 may regulate the flow rate of the hydrogen supplied to the power generation section 340, by regulating the communication state of the piping 434 and the piping 630. The flow rate regulation valve 631 may act based on the instruction from the control section 560.

In this embodiment, the socket 632 is connected to the nitrogen cylinder 542 via the piping 690. By this, the nitrogen is supplied to the power generation section 340 from the nitrogen cylinder 542 via the piping 690 and the socket 632. One end of the piping 690 is connected, for example, to a part of the piping 630. The other end of the piping 690 is connected to the nitrogen cylinder 542. A check valve 692 and a flow rate regulation valve 694 may be positioned between the connecting portion connecting the piping 690 to the piping 630 and the nitrogen cylinder 542. The flow rate regulation valve 694 may regulate the flow rate of the nitrogen supplied to the power generation section 340, by regulating the communication state of the piping 434 and the piping 690. The flow rate regulation valve 694 may act based on the instruction from the control section 560.

In this embodiment, the socket 642 is connected to the plug 446 when the fuel cell unit 42 is preserved in the preservation container 122. The socket 642 may be connected to the compressor 534 via the piping 640. By this, the air is supplied to the power generation section 340 from the compressor 534 via the piping 640 and the socket 642. The socket 642 is positioned on one end of the piping 640, and the compressor 534 is positioned on the other end. The flow rate regulation valve 641 may be positioned between the socket 642 and the compressor 534. The flow rate regulation valve 641 may regulate the flow rate of the air supplied to the power generation section 340, by regulating the communication state of the piping 444 and the piping 640. The flow rate regulation valve 641 may act based on an instruction from the control section 560.

In this embodiment, the socket 642 is connected to the nitrogen cylinder 542 via the piping 690. By this, the nitrogen is supplied to the power generation section 340 from the nitrogen cylinder 542 via the piping 690 and the socket 642. One end of the piping 690 is connected, for example, to a part of the piping 640. The other end of the piping 690 is connected to the nitrogen cylinder 542. A check valve 696 and a flow rate regulation valve 698 may be positioned between the connecting portion connecting the piping 690 to the piping 640 and the nitrogen cylinder 542. The flow rate regulation valve 698 may regulate the flow rate of the nitrogen supplied to the power generation section 340, by regulating the communication state of the piping 444 and the piping 690. The flow rate regulation valve 698 may act based on an instruction from the control section 560.

In this embodiment, the socket 652 is connected to the temperature regulation section 544 via the piping 650. By this, the temperature regulation medium is supplied to the power generation section 340 via the piping 650 and the socket 652.

In this embodiment, the socket 662 is connected to the temperature regulation section 544 via the piping 664. By this, the temperature regulation medium is discharged from the power generation section 340 via the socket 662 and the piping 664.

In this embodiment, the socket 672 is connected to the condenser 554 via the piping 674. By this, the exhaust gas is discharged from the power generation section 340 via the socket 672 and the piping 674.

In this embodiment, the socket 682 is connected to the water tank 552 via the piping 684. By this, the drainage water is discharged from the power generation section 340 via the socket 682 and the piping 684.

In this embodiment, detail of the supporting portion 510 has been explained, taking a case where the supporting portion 510 does not have a connecting member for a power cable and a connecting member for a communication cable as an example, for the purpose of simplifying the explanation. However, the supporting portion 510 is not limited to this embodiment. In another embodiment, the supporting portion 510 may have at least one of the connecting member for a power cable and the connecting member for the a communication cable.

For example, the supporting portion 510 have the connecting member for electrically connecting the power source 570 of the preservation environment regulation section 124 and the power connector 324 of the fuel cell unit 42. For example, the supporting portion 510 have a socket which can be coupled to the power connector 324 and a power cable for electrically connecting said socket to the power source 570. Note that, as described above, the power connector 324 may have a wireless power supply device. In this case, if the preservation environment regulation section 124 has a wireless power supply device, the supporting portion 510 may not necessarily have the above-described connecting member

For example, the supporting portion 510 have the connecting member for establishing communication between the communication section 522 of the preservation environment regulation section 124 and the communication connector 322 of the fuel cell unit 42. For example, the supporting portion 510 have a socket which can be coupled to the communication connector 322 and a communication cable for connecting said socket to the communication section 522. Note that, as described above, the communication connector 322 may have a wireless communication device. In this case, the supporting portion 510 may not necessarily have the above-described connecting member.

The piping 640 may be an example of the oxidant agent piping. The flow rate regulation valve 641 may be an example of the second regulation section. The socket 642 may be an example of the oxidant agent piping. The piping 690 may be an example of the purge gas piping. The flow rate regulation valve 694 may be an example of the purge gas flow rate regulation section. The flow rate regulation valve 698 may be an example of the purge gas flow rate regulation section and the first regulation section.

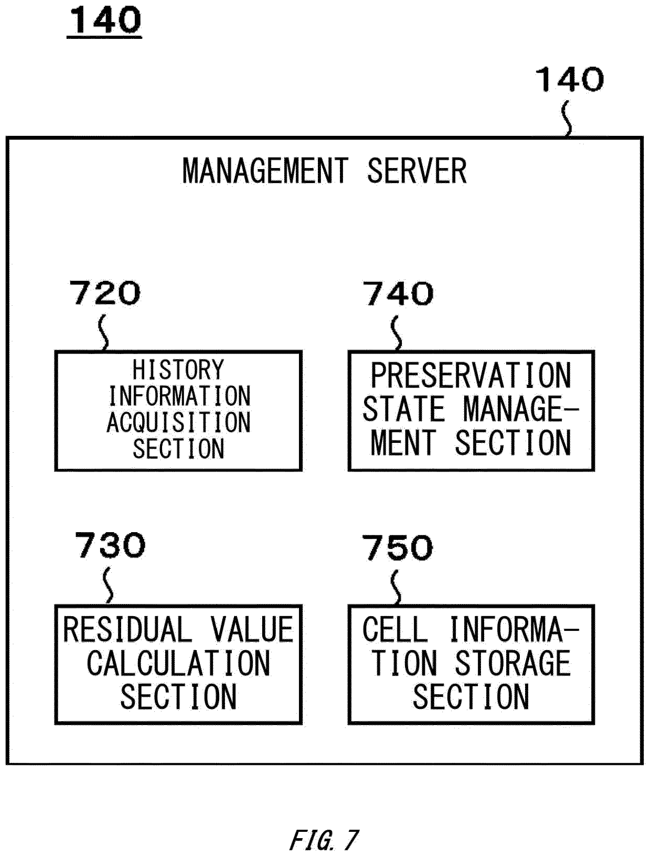

Fig. 7 schematically shows an example of system configuration of a management server 140. In this embodiment, the management server 140 comprises a history information acquisition section 720, a residual value calculation section 730, a preservation state management section 740, and a cell information storage section 750.

In this embodiment, the history information acquisition section 720 acquires various kinds of history information related to the fuel cell unit 42. The history information acquisition section 720 may store the acquired history information in the cell information storage section 750.

In one embodiment, the history information acquisition section 720 acquires the information indicating the running history of the fuel cell unit 42 during the period when the fuel cell unit 42 is attached to the power source system 40, via the communication section 226 of the vehicle 20. The history information acquisition section 720 acquires the information indicating the fluctuation history of the state of the surrounding environment of the fuel cell unit 42 during the period when the fuel cell unit 42 is attached to the power source system 40, via the communication section 226 of the vehicle 20.

In another embodiment, the history information acquisition section 720 acquires the information indicating the running history of the fuel cell unit 42 during the period when the fuel cell unit 42 is preserved in the preservation device 120, via the communication section 522 of the preservation device 120. The history information acquisition section 720 acquires the information indicating the fluctuation history of the state of the surrounding environment of the fuel cell unit 42 during the period when the fuel cell unit 42 is preserved in the preservation device 120, via the communication section 522 of the preservation device 120.

Further in another embodiment, the history information acquisition section 720 acquires the information indicating the running history of the fuel cell unit 42 during the period when the fuel cell unit 42 is preserved in the preservation device 120, after the fuel cell unit 42, which was preserved in the preservation device 120, is attached to the power source system 40, via the communication section 226 of the vehicle 20. The history information acquisition section 720 acquires the information indicating the fluctuation history of the state of the surrounding environment of the fuel cell unit 42 during the period when the fuel cell unit 42 is preserved in the preservation device 120, after the fuel cell unit 42, which was preserved in the preservation device 120, is attached to the power source system 40, via the communication section 226 of the vehicle 20.

In this embodiment, the residual value calculation 730 assesses the value of each of the one or more fuel cell unit 42. The residual value calculation section 730 may store the assessment result related to the value (this may be called "residual value" in some cases) of each of the one or more fuel cell unit 42 to the cell information storage section 750.

In one embodiment, the residual value calculation section 730 acquires the information indicating the current power generating performance for each of the one or more fuel cell unit 42. The information indicating the power generating performance of each of the one or more fuel cell unit 42 can be acquired, for example, my means of running each of the one or more fuel cell unit 42 in the assessment mode for assessing the power generating performance. The residual value calculation section 730 may calculate the residual value of respective fuel cell units, based on the power generating performance of each of the one or more fuel cell unit 42. The residual value calculation section 730 takes one or more variable indicating the power generating performance of the fuel cell unit 42 as the explanatory variable, and calculates the residual value of each of the one or more fuel cell unit 42 by employing a table, a function or a model which takes the residual value of the fuel cell unit 42 as the objective variable.

In another embodiment, the residual value calculation section 730 may calculate the residual value of the one or more fuel cell unit 42, based on the history information acquired by the history information acquisition section 720. The residual value calculation section 730 may calculate, for example, the residual value of each of the one or more fuel cell unit 42, based on at least one of the running history of each of the one or more fuel cell unit 42 and the fluctuation history of the state of the surrounding environment of each of the one or more fuel cell unit 42. The residual value calculation section 730 takes one or more kind of history information related to the fuel cell unit 42 as the explanatory variable, and calculates the residual value of each of the one or more fuel cell unit 42 by employing a table, a function or a model which takes the residual value of the fuel cell unit 42 as the objective variable.

In this embodiment, the preservation state management section 740 manages the preservation state of each of the one or more fuel cell unit 42 preserved by the preservation device 120. For example, the preservation state management section 740 determines the preservation form of the fuel cell unit 42, based on the residual value of the fuel cell unit 42 calculated by the residual value calculation section 730.

In one embodiment, the preservation state management section 740 may determine, based on the residual value of given fuel cell unit 42, at least one of the followings: whether or not to perform at least one of the purging process and the flushing process for the inside of said given fuel cell unit 42; whether or not to perform at least one of the purging process and the flushing process for the inside of the preservation container 122 which preserves said given fuel cell unit 42; the frequency of the above-described purging process and the flushing process; and the intensity of the above-described purging process and the flushing process. In another embodiment, the preservation state management section 740 may determine, based on the residual value of given fuel cell unit 42, at least one of the followings: whether or not to run said given fuel cell unit 42; the power generation amount of said given fuel cell unit 42; and the power generation mode of said given fuel cell unit 42. The preservation state management section 740 may determine, based on the residual value of given fuel cell unit 42, the running frequency of said given fuel cell unit 42.

In another embodiment, the preservation state management section 740 determines to run the fuel cell unit 42 to generate power, if the assessment of the fuel cell unit 42 by the residual value calculation section 730 is smaller than the predefined reference. The preservation state management section 740 may determine, for the above-described fuel cell unit 42, not to perform a process for inhibiting the deterioration progress. The power generated by the above-described fuel cell unit 42 may be utilized by the preservation device 120 or by other fuel cell unit 42 preserved in the preservation device 120.

Further in another embodiment, the preservation state management section 740 determines, for the fuel cell unit 42 for which the assessment by the residual value calculation section 730 satisfies the predefined conditions, among multiple fuel cell units preserved by the preservation device 120, to run said fuel cell unit 42 to generate a power. The predefined condition may be a condition that the assessment result is the lowest. The preservation state management section 740 may determine, for the above-described fuel cell unit 42, not to perform a process for inhibiting the deterioration progress. The power generated by the above-described fuel cell unit 42 may be utilized by the preservation device 120 or by other fuel cell unit 42 preserved in the preservation device 120.

In this embodiment, the cell information storage section 750 stores various kinds of information related to each of the one or more the fuel cell unit 42. For example, the cell information storage section 750 stores, for each of the one or more fuel cell unit 42, various kinds of history information acquired by the history information acquisition section 720. The cell information storage section 750 may store, for each of the one or more fuel cell unit 42, the residual value calculated by the residual value calculation section 730.

The history information acquisition section 720 may be an example of the environment information acquisition section. The residual value calculation section 730 may be an example of the value assessment section. The preservation state management section 740 may be an example of the preservation form determination section.

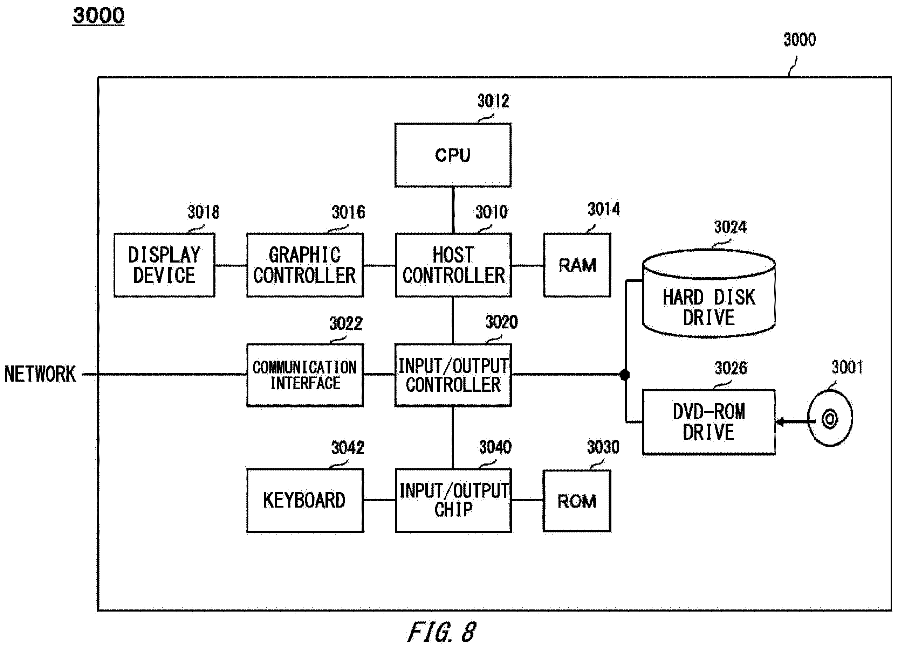

Fig. 8 schematically shows an example of a computer 3000 in which multiple aspects of the present invention may be entirely or partially embodied. A part of the vehicle 20 may be realized by the computer 3000. For example, at least one of the vehicle control section 224, the power control section 248 and the FC control section 330 is realized by the computer 3000. A part of the preservation device 120 may be realized by the computer 3000. For example, the control section 560 is realized by the computer 3000. A part of the management server 140 may be realized by the computer 3000.

The program installed in the computer 3000 can make the computer 3000 function as an operation associated with a device according to the embodiment of the present invention or as one or more "section" of said device, or make it perform said operation or said one or more "section", and/or make the computer 3000 perform a process according to the embodiment of the present invention or the stage of said process. Such program may be performed by the CPU 3012, so as to make the computer 3000 perform given operation associated with some or all of the flowcharts and the blocks of the block diagrams described in this specification.

The computer 3000 according to this embodiment includes the CPU 3012, the RAM 3014, the graphic controller 3016 and the display device 3018, and they are connected to each other by the host controller 3010. The computer 3000 further includes the communication interface 3022, the hard disk drive 3024, the DVD-ROM drive 3026 and the input/output unit such as an IC card drive, and they are connected to the host controller 3010 via the input/output controller 3020. The computer 3000 further includes the ROM 3030 and the legacy input/output unit such as the keyboard 3042, and they are connected to the input/output controller 3020 via the input/output chip 3040.

The CPU 3012 acts pursuant to the program stored in the ROM 3030 and the RAM 3014, and controls respective units by them. The graphic controller 3016 acquires image data created by the CPU 3012 on a frame buffer or the like provided in the RAM 3014 or in itself, and causes the image data to be displayed on the display device 3018..

The communication interface 3022 communicates with other electronic devices via the network. The hard disk drive 3024 stores the program and data to be used by the CPU 3012 in the computer 3000. The DVD-ROM drive 3026 reads a program or data from the DVD-ROM 3001, and provides the program or data to the hard disk drive 3024 via the RAM 3014. The IC card drive reads the program and data from the IC card, and/or writes the program and data to the IC card.

The ROM 3030 stores a boot program, etc. executed by the computer 3000 at the time of activation, and/or a program dependent on the hardware of the computer 3000. The input/output chip 3040 may connect various input/output units to the input/output controller 3020, via a parallel port, a serial port, a keyboard port, a mouse port, etc.

A program is provided by a computer-readable storage medium like the DVD-ROM 3001 or the IC card. A program is read from the computer-readable storage medium, and installed in the hard disk drive 3024, the RAM 3014 or the ROM 3030, which are the examples of computer-readable storage media, and then executed by the CPU 3012. Information processing described in these programs are read by the computer 3000, and result in cooperation between the program and the above-described various types of hardware resources. A device or method may be configured by realizing an operation or processing of information pursuant to the use of the computer 3000.

For example, if a communication is performed between the computer 3000 and an external device, the CPU 3012 may execute the communication program loaded on the RAM 3014 to instruct communication processing, based on the processing described in the communication program, to the communication interface 3022. The communication interface 3022 reads, under the control by the CPU 3012, the transmission data stored in the transmission buffer region provided in a storage medium such as a RAM 3014, a hard disk drive 3024, a DVD-ROM 3001 or an IC card, sends the transmission data so read to the network, or writes the received data received from the network into a reception buffer region etc. provided on the storage medium.

Also, the CPU 3012 may make all or the necessary portion of a file or a database stored in an external storage medium such as a hard disk drive 3024, a DVD-ROM drive 3026 (DVD-ROM 3001), or an IC card be able to be read by the RAM 3014, to accordingly perform various types of processing to the data on the RAM 3014. Then, the CPU 3012 may write back the processed data into an external storage medium.

Various types of programs, data, table and various types of information such as a database may be stored in a storage medium to receive information processing. The CPU 3012 may perform, against the data read from the RAM 3014, various types of processing, including various types of operations designated by an instruction sequence of a program, which are described throughout this disclosure, an information processing, a condition judgment, a conditional branch, an unconditional branch, information search/replacement, etc., and write back the result to the RAM 3014. Moreover, the CPU 3012 may search information in a file in a storage medium, in a database, etc. For example, if multiple entries, each having an attribute value of a first attribute associated with an attribute value of a second attribute, are stored in the storage medium, the CPU 3012 may search an entry matching with the condition in which the attribute value of the first attribute is designated from among said multiple entries, read the attribute value of the second attribute stored in said entry, and thereby acquire the attribute value of the second attribute associated with the first attribute which satisfies the predefined condition.

A program or a software module explained above may be stored in a computer 3000 or in a computer-readable storage medium in proximity to the computer 3000. Furthermore, a storage medium such as a hard disk or a RAM provided within a server system connected to a dedicated communication network or the Internet can be used as a computer-readable storage medium, to thereby provide the above-described program to the computer 3000 via the network.

While the embodiments of the present invention have been described, the technical scope of the invention is not limited to the above-described embodiments. It is apparent to persons skilled in the art that various alterations and improvements can be added to the above-described embodiments. Also, to the extent not being technically inconsistent, matters explained about given embodiment can be applied to other embodiments. Moreover, each component may have characteristics similar to those of other components which have the same name and have the different numerals. It is also apparent from the scope of the claims that the embodiments added with such alterations or improvements can be included in the technical scope of the invention.

The actions, procedures, steps, and stages of each process performed by a device, system, program, and method shown in the claims, embodiments, or diagrams can be performed in any order as long as the order is not indicated by "prior to," "before," or the like and as long as the output from a previous process is not used in a later process. Even if the action flow is described using phrases such as "first" or "next" in the claims, embodiments, or diagrams, it does not necessarily mean that the process must be performed in this order.

### EXPLANATION OF REFERENCES

10 Communication network, 20 Vehicle, 40 Power source system, 42 Fuel cell unit, 100 Fuel cell management system, 120 Preservation device, 122 Preservation container, 124 Preservation environment regulation section, 140 Management server, 222 Vehicle drive section, 224 Vehicle control section, 226 Communication section, 242 Fuel cell system, 244 Power accumulation section, 246 Power converting section, 248 Power control section, 312 Fuel supply unit, 314 Oxidant agent supply unit, 316 Temperature regulation medium supply unit, 322 Communication connector, 324 Power connector, 326 Utility connector for power generation, 330 FC control section, 332 Memory, 340 Power generation section, 342 Sensor, 344 Piping, 350 Auxiliary battery, 420 Main body, 434 Piping, 436 Plug, 438 Concave portion, 444 Piping, 446 Plug, 448 Concave portion, 454 Piping, 456 Plug, 458 Concave portion, 464 Piping, 466 Plug, 468 Concave portion, 474 Piping, 476 Plug, 478 Concave portion, 484 Piping, 486 Plug, 488 Concave portion, 510 Supporting portion, 522 Communication section, 532 Hydrogen cylinder, 534 Compressor, 542 Nitrogen cylinder, 544 Temperature regulation section, 546 Humidity regulation section, 552 Water tank, 554 Condenser, 560 Control section, 570 Power source, 574 Power accumulation section, 576 Power converting section, 600 Main body, 610 Concave portion, 612 Sealing member, 620 Piping, 622 Gas supply nozzle, 623 Gas exhaust nozzle, 624 Piping, 626 Sensor, 627 Signal cable, 630 Piping, 631 Flow rate regulation valve, 632 Socket, 640 Piping, 641 Flow rate regulation valve, 642 Socket, 650 Piping, 652 Socket, 662 Socket, 664 Piping, 672 Socket, 674 Piping, 682 Socket, 684 Piping, 690 Piping, 692 Check valve, 694 Flow rate regulation valve, 696 Check valve, 698 Flow rate regulation valve, 720 History information acquisition section, 730 Residual value calculation section, 740 Preservation state management section, 750 Cell information storage section, 3000 Computer, 3001 DVD-ROM, 3010 Host controller, 3012 CPU, 3014 RAM, 3016 Graphic controller, 3018 Display device, 3020 Input/output controller, 3022 Communication interface, 3024 Hard disk drive, 3026 DVD-ROM drive, 3030 ROM, 3040 Input/output chip, 3042 Keyboard

## Claims

1. A preservation system for preserving a power supply device for supplying power to a work machine, the power supply device being configured to be detachable to the work machine, wherein:
the power supply device includes:
a fuel cell;
an oxidant agent supply passage, positioned inside the power supply device, for supplying oxidant agent to the fuel cell; and
(i) a piping positioned outside the power supply device, and (ii) a connecting portion for oxidant agent for connecting the oxidant agent supply passage;
the preservation system comprising:
a preservation section for preserving the power supply device detached from the work machine;
a purge gas conserving section for conserving a purge gas in order for purging the fuel cell and the oxidant agent supply passage;
a purge gas piping, being a piping positioned outside the power supply device, with one end thereof connected to the connecting portion for oxidant agent of the power supply device and other end thereof connected to the purge gas conserving section; and
a purge gas flow rate regulation section for regulating flow rate of the purge gas supplied to the power supply device.

2. The preservation system according to claim 1, wherein:
the preservation section is configured to preserve the power supply device, which has been used at least once in the work machine, under a state where the power supply device is detached from the work machine.

3. The preservation system according to claim 1 or claim 2, wherein:
the power supply device further includes a first oxidant agent supply section, positioned inside the power supply device, for supplying oxidant agent to the fuel cell, utilizing power and via the oxidant agent supply passage; and
the preservation system further comprises a power source for supplying power to the first oxidant agent supply section.

4. The preservation system according to claim 3, wherein:
the power supply device includes a first power supply device and a second power supply device, and
the preservation section includes:
a first preservation section for preserving the first power supply device having the first oxidant agent supply section; and
a second preservation section for preserving the second power supply device not having the first oxidant agent supply section.

5. The preservation system according to claim 4, further comprising:
a second oxidant agent supply section, positioned outside the power supply device, for supplying oxidant agent to the fuel cell of the second power supply device via the connecting portion for oxidant agent and the oxidant agent supply passage.

6. The preservation system according to any one of claims 1 to 5, wherein:
the preservation section includes a housing section for tightly sealing and housing the power supply device.

7. The preservation system according to claim 6, further comprising an oxidant agent piping for supplying oxidant agent to the oxidant agent supply passage, the oxidant agent piping being a piping positioned outside the power supply device, with one end thereof connected to the connecting portion for oxidant agent of the power supply device;
wherein a connecting portion between the oxidant agent piping and the housing section is sealed.

8. The preservation system according to any one of claims 1 to 6, further comprising an oxidant agent piping for supplying oxidant agent to the oxidant agent supply passage, the oxidant agent piping being a piping positioned outside the power supply device, with one end thereof connected to the connecting portion for oxidant agent of the power supply device, wherein;
the connecting portion for oxidant agent connects the oxidant agent supply passage to the purge gas piping and the oxidant agent piping;
the connecting portion for oxidant agent includes:
a first regulation section for regulating a communication state between the oxidant agent supply passage and the purge gas piping; and
a second regulation section for regulating a communication state between the oxidant agent supply passage and the oxidant agent piping.

9. The preservation system according to any one of claims 1 to 8, further comprising:
a management section for managing a state of the power supply device preserved in the preservation section.

10. The preservation system according to claim 9, wherein:
the management section including:
an environment information acquisition section for acquiring information indicating a state of surrounding environment of the preservation section; and
a value assessment section for assessing a value of the power supply device preserved in the preservation section, based on the information acquired by the environment information acquisition section.

11. The preservation system according to claim 10, wherein:
the management section includes a preservation form determination section for determining a preservation form of the power supply device, based on a value of the power supply device assessed by the value assessment section.

12. The preservation system according to claim 11, wherein:
the preservation form determination section is configured to determine to generate power by running the power supply device preserved in the preservation section if assessment of a value of the power supply device by the value assessment section is lower than a predefined reference.

13. The preservation system according to claim 11, wherein:
the power supply device includes a plurality of the power supply devices;
the preservation section preserves the plurality of power supply devices;
the value assessment section is configured to assess a value of each of the plurality of power supply devices; and
the preservation form determination section is configured to determine, for a certain power supply device for which assessment by the value assessment section satisfies a predefined condition among the plurality of power supply devices, to generate power by running said certain power supply device.
